# EUROPEAN PATENT SPECIFICATION

(11) **EP 4 348 217 B1**
(45) Date of publication and mention of the grant of the patent: **29.04.2026**
(21) Application number: 22731316.0
(22) Date of filing: 24.05.2022
(51) Int. Cl.: G01N 1/31, G01N 1/36, G01N 35/04

(54) **AUTOMATED WORKSTATION, AND PROCESS, FOR HANDLING HISTOLOGICAL SAMPLES IN THE EMBEDDING STEP**
AUTOMATISIERTE ARBEITSSTATION UND VERFAHREN ZUR HANDHABUNG HISTOLOGISCHER PROBEN IN DEM EINBETTSCHRITT
POSTE DE TRAVAIL AUTOMATISÉ, ET PROCÉDÉ, POUR LA MANIPULATION D'ÉCHANTILLONS HISTOLOGIQUES DANS L'ÉTAPE D'ENROBAGE

(30) Priority: 26.05.2021 IT 202100013757
(43) Date of publication of application: 10.04.2024
(73) Proprietor: Inpeco SA, 6883 Novazzano (CH)
(72) Inventor: PEDRAZZINI, Gianandrea, 6900 Paradiso (CH); ZUCCA, Alessandra, 09047 Selargius (Cagliari) (IT)
(74) Representative: Buzzi, Notaro & Antonielli d'Oulx S.p.A.
(86) International application number: PCT/IB2022/054847
(87) International publication number: WO 2022/249059

(56) References cited:
- US-A1- 2010 330 660
- US-A1- 2015 198 509

## Description

### Field of the invention

The present invention concerns an automated workstation for an operator, and a process, for handling histological samples in the embedding step.

In the field of anatomical pathology, the embedding step of a histological tissue in an embedding material (typically paraffin) is performed after a surgical sample taken from a patient has undergone cutting ("grossing"), formalin fixation and a treatment ("processing") in which the tissue sample is dehydrated in alcohol and then clarified with xylene, so as to transform the tissue itself from hydrophilic to hydrophobic, in order to proceed with a first impregnation in paraffin.

### Prior art

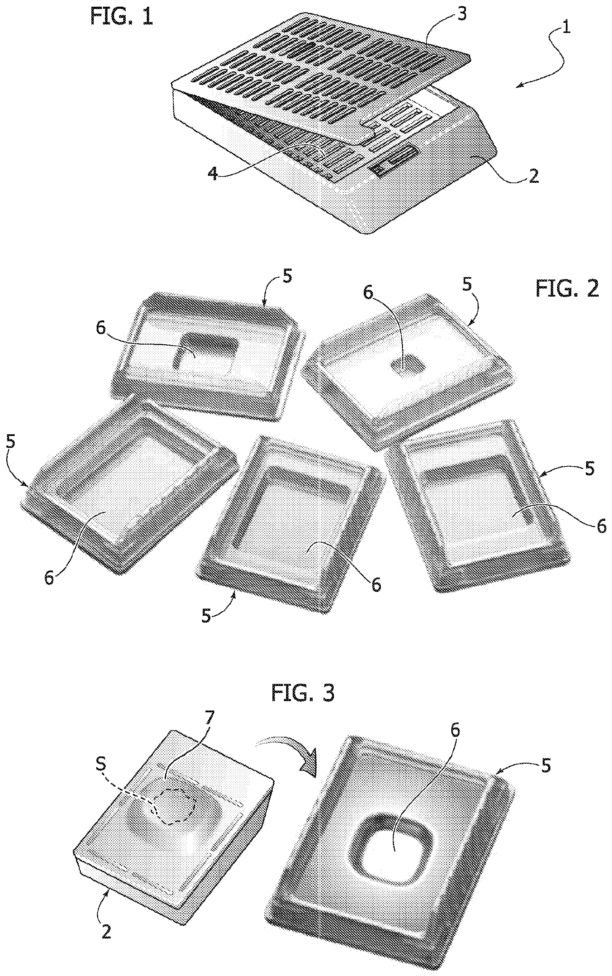

According to the conventional technique, in the aforementioned grossing step the biological tissue is inserted into a histology cassette, within which it is while it undergoes the aforementioned processing operation, to be then directed towards the subsequent embedding step. An example of a conventional histology cassette is illustrated in Figure 1 of the annexed drawings.

With reference to this figure, the number 1 indicates the assembly of a cassette 2 and a lid 3. In a typical example, the body of the cassette 2, made of plastic material, is in the form of a relatively flat container, with a flat bottom wall 4 and two pairs of opposite walls defining a containment cavity for the histological sample, which can be closed with the lid 3. The bottom wall 4 of the cassette 2 is shaped like a grid, for reasons that will become clear in the following.

According to the conventional process, which is performed entirely manually, before carrying out the embedding procedure an operator separates the lid 3 from the cassette 2, takes the histological sample from the cassette 2 with the aid of a clamp and places it on the bottom of a mould intended to receive the embedding material, and already arranged with a first layer of embedding material (typically paraffin at a temperature sufficient to keep it in a fluid state). The mould can be constituted, for example, of plastic or metallic material and can have a bottom of dimensions which vary according to the sample to be received.

Figure 2 of the annexed drawings illustrates some examples of moulds 5 of a conventional type. The moulds 5 are configured and sized to receive the body of a cassette 2 above them. Indeed, after the histological sample has been positioned on the bottom of a mould 5, the cassette 2 (separated from the lid 3) is applied on top of the mould 5. Still with reference to Figure 2, it can be seen that, although the external dimensions of each mould 5 are chosen in such a way as to allow the application of the body of the cassette over the mould, each mould 5 has a bottom cavity 6, intended to receive the histological sample, which varies in size from mould to mould, depending on the histological sample to be received.

As indicated above, in the conventional procedure, the operator pours a first layer of embedding material on the bottom 6 of a mould 5 and then inserts the histological sample taken from a cassette on the bottom 6 of the mould 5. This step is extremely critical to ensure a high reliability of the examination that is subsequently performed on the sample. In fact, the operator must pay attention to place the histological sample on the bottom of the mould with the most appropriate orientation in order to guarantee the best results in the next microtomy step, in which the sample embedded in a block of embedding material is subjected to the cut.

Once the operator has placed the histological sample on the bottom of the mould 5, orienting it in the most appropriate way, he applies the cassette 2 above the mould 5.

Once this operation has been performed, the operator places the mould 5 containing the histological sample, with the cassette 2 applied above it, under a dispensing tap of embedding material (typically paraffin) maintained at a temperature sufficient to leave it in a fluid state. In this step, the embedding material is poured by gravity into the mould 5, making it pass through the openings of the bottom wall 4 of the cassette. Fluid is poured in sufficient quantity to fill the mould and the containment space of the cassette above the mould.

Once the mould 5 has been filled with embedding material, it is left to cool, by placing it on a cold plate at a temperature usually between -5°C and -10°C, until the embedding material solidifies. At that point, the solidified body 7 of the embedding material, with the histological sample S embedded therein (Figure 3) is separated from the mould 5. The body of the cassette 2 remains joined to the solidified body 7.

The conventional process described above guarantees a good reliability of the histological examination, as it entrusts the orientation step of the histological sample inside the mould to an operator. This step, as already indicated, is critical for obtaining a good final result and requires the skill of an expert operator who chooses the best orientation of the sample based on the specific features, the shape and the size of the sample and also considering the type of analysis for which it is intended.

At the same time, the traditional, totally manual process involves an intrinsic limit to the productivity of the laboratory.

Another drawback of the fully manual conventional process is that it is subject to a risk of errors which, although small, is not null. Cassette 2 containing each histological sample normally carries an information carrier related to the sample contained therein. This allows the system to preserve a minimum level of traceability of the sample, in the sense of associating the sample with a series of information relating to it, including the identification of the patient, the type of surgical sampling to which it was subjected and the type of test to which it is intended. In a traditional anatomical pathology laboratory, each operator receives on a bench a plurality of cassettes each containing a histological sample and, for each cassette, carries out the above described cycle of operations to embed a histological sample in the embedding material. This way of operating naturally involves the risk of exchanging the samples with each other and of associating a wrong sample to a wrong cassette.

Another drawback of the traditional process lies in the fact that the operator is not physically able to precisely control the quantity of embedding material that is poured into the mould. This may involve the need, after the solidification of the body of embedding material containing the histological sample inside it, to perform a trimming of said body to the predetermined dimensions suitable for its introduction into the microtome, in case the amount of embedding material poured is overflowing. Similarly, an insufficient filling of embedding material within the mould would require a subsequent pouring of the material itself. These operations involve a high waste of time and result in a consequent loss of productivity.

Documents US 2015/198509 A1 (on which the preambles of claims 1 and 9 are based) and JP 6 383 625 B2 describe a system and a process for automatically carrying out the embedding operation of a histological sample in an embedding material. According to this proposal, the histological sample is arranged inside a support, of the dedicated type, which is in turn arranged within a cassette, also of the dedicated type. The support locks the histological tissue in place, exerting a specific compression action on the tissue itself, in order to maintain a sample orientation that is set during the previous grossing step. Still according to this known proposal, at least three different types of supports for the sample are provided, which can be chosen according to the size of the sample. The support, with the sample inserted therein, is positioned inside a cassette, which in the case of this known solution makes the functions of the mould of the conventional process. The cassettes, with inside them the supports containing the samples, are then placed inside an apparatus which automatically performs the embedding operation.

The aforementioned prior art is not free from drawbacks. First of all, the preparation of the histological sample within a support which is then positioned inside the cassette can involve the application of an excessive pressure on the sample, so that during the subsequent cutting operation, in microtomy, it can occur that the material constituting the support sticks to the sample or leaves a footprint on the sample, contaminating it, or in any case making necessary subsequent operations of cleaning and separation between the actual organic tissue and the material that adhered to the tissue, with consequent loss of time for the operator. In other cases, it may occur that the compression of the tissue within the support is not sufficient to prevent the sample from moving inside the support, losing the orientation it was given and also with the risk of falling out of the cassette, in particular during the processing step in which the cassettes containing the samples undergo various passages through the different reagents of the process. But the main drawback of the aforementioned known system is that the process carried out within the embedding workstation is completely "closed", in the sense that it does not allow any type of check in progress on the operations that are performed within the workstation. This can result in an error (for example, an incorrect association of a sample with the identification information of the sample) being detected too late, i.e. when a sample embedded in an embedding material has already arrived to the microtomy station in order to be cut. The same drawback exists when, for example, it occurs that the sample in a cassette has been lost, or that it is badly oriented and therefore unsuitable for cutting, or even when it is found that the same support embeds two non-homogeneous samples. In the case of a badly oriented sample, the diagnosis can certainly be compromised. If, on the other hand, a sample is lost, an investigation must be started to recover it with the consequent need to block the system, with significant drawbacks from the point of view of productivity.

### Object of the invention

The main object of the present invention is to solve the drawbacks of the known solutions.

In particular, an object of the present invention is to provide an automated workstation and a process for the embedding of a histological sample in an embedding material which on the one hand keeps a high degree of reliability as regards the orientation of the histological sample during the embedding operation and the preservation of this orientation during the entire operation, but which on the other hand allows to significantly increase productivity compared to the conventional totally manual process, also standardizing its execution.

Another important object of the present invention is to provide an automated workstation and a process for embedding a histological sample in an embedding material which achieves a very high degree of safety against the risk of errors both as it concerns the correct association of a histological sample with information relating to its identification, and as it concerns the control of the presence and correct positioning of the histological sample during the whole embedding process.

Another object of the present invention is to provide an automated workstation and a process for embedding a histological sample in an embedding material which are completely "open" in the sense of allowing a verification check and, if necessary, a correction intervention during the entire execution of the embedding process.

A further object of the invention is to provide an automated workstation and a process for embedding a histological sample in an embedding material which allow an extremely precise control of the amount of embedding material that is dispensed within the mould and the associated cassette also according to the volume, different from case to case, filled by the histological sample to be embedded, with the consequent possibility of avoiding waste of time due to subsequent trimming operations of the solidified body of the embedding material.

A further object of the invention is to provide an automated workstation and a process for the embedding of an organic sample in an embedding material which have a high degree of flexibility, in the sense of being able to operate with cassettes and moulds of any known type used in the conventional manual process, without requiring the preparation of dedicated cassettes or moulds.

A still further object of the invention is that of realizing all the aforementioned goals with relatively simple means and with small dimensions and low cost.

### Summary of the invention

In order to achieve one or more of the aforementioned objects, the invention relates to an automated workstation for an operator according to claim 1 and a process according to claim 9.

According to a further feature of the invention, the workstation further comprises a second handling device, to pick up from the transfer device each mould and the associated cassette, which are filled with embedding material, and to deposit them at said cooling area and, preferably, also a third handling device, which can be constituted by the second handling device or by a further handling device, configured and programmed to pick up a cassette and the solidified body of embedding material adhering thereto, together with the associated mould, after they have been cooled at said cooling area, and to feed them at first to a station for detachment of each mould from the solidified body adhering to the cassette and thereafter to an output area of the workstation which is configured for delivering the cassettes, with the associated solidified bodies in which the histological samples are embedded, to a transport system.

According to a further preferred feature, said working area is equipped with a monitor for displaying the information contained in the information carrier of the cassette located at the working area to the operator.

In a further embodiment, the working area is provided with a mould feeding system, for feeding moulds to the working area and, preferably, said mould feeding system is controlled by said electronic controller in such a way as to select, on the basis of the information contained in the information carrier of the cassette located at the working area and after detection of the size of the histological sample which is within the cassette, a mould of a type suitable for the histological sample to be processed and to feed this mould to the working area.

Still in a further embodiment, the workstation comprises an automatic transport system for retrieval of the moulds after their detachment from the respective solidified body of embedding material and from the associated cassette, and for feeding the retrieved moulds, through a cleaning station, back to the working area.

The present invention also relates to the process which is carried out by means of the automated workstation described above.

### Advantages of the invention

Thanks to the above indicated features, the workstation according to the invention allows to obtain a series of relevant advantages.

First of all, productivity is drastically increased compared to the case of the conventional process, since the entire cycle of operations that precedes and follows the step of placing and orientating the sample within the mould is carried out in a totally automated way.

At the same time, an operator can manually perform the step of placing and orienting the histological sample within the mould, which ensures greater reliability on the correct orientation of the sample and on the maintenance of such correct orientation during the process, which, as it has been seen, constitutes a critical factor for obtaining an optimal result in the following analysis of the sample.

Furthermore, the workstation according to the invention allows a drastic reduction, if not a total elimination, of the risk of errors, due to the fact that it is arranged to feed the working area of the operator one cassette at a time, in an automated way, when a signal indicating the conclusion of the cycle of operations carried out in the working area on a previous cassette has been detected.

A further important advantage of the workstation according to the invention lies in the fact that it is totally "open" in the sense that it allows traceability of each histological sample during the entire cycle of operations to which it is subjected, with the possibility of checking at all times the association of a specific sample with the information that identify it, and of checking the correct performance of operations and intervene during the work to correct any detected abnormality.

A further relevant advantage of the invention lies in the fact that it allows a precise control of the quantity of embedding material that is poured into each mould, linked to the volume occupied by the histological sample, which gives the possibility of obtaining, with the solidification of the embedding material, a body without excess portions which therefore does not require any shaping or trimming.

A further advantage of the workstation according to the invention is that of being able to adapt to the use with any cassette or mould of a known type, as well as to the interfacing with any known device able to perform the previous processing step.

### Detailed description of preferred embodiments

Further characteristics and advantages of the invention will be clear from the following description with reference to the attached drawings, provided purely by way of non-limiting example, in which:
Figure 1 is a perspective view of a known type of histology cassette, which can also be used in the workstation according to the invention,
Figure 2 shows a series of known moulds that can also be used in the workstation according to the invention,
Figure 3 illustrates a step of the process according to the prior art, wherein the solidified body of an embedding material containing inside it an organic component and with a cassette body associated with it, is separated from a mould in which it has been obtained,
Figure 4 is a perspective view of an embodiment of the workstation according to the invention,
Figure 5 is a further perspective view of the main components of an embodiment of the workstation according to the invention,
Figure 6 illustrates in an enlarged perspective view a detail of the workstation of Figure 5, in a step of the process according to the invention, and
Figures 7, 8, 8A and 9 - 21 are perspective views that illustrate further steps of the process according to the invention carried out with the workstation of Figure 5.
Figures 1-3 have already been described with reference to the conventional process in which all the operations necessary for the embedding of a histological sample S in an embedding material are performed manually.

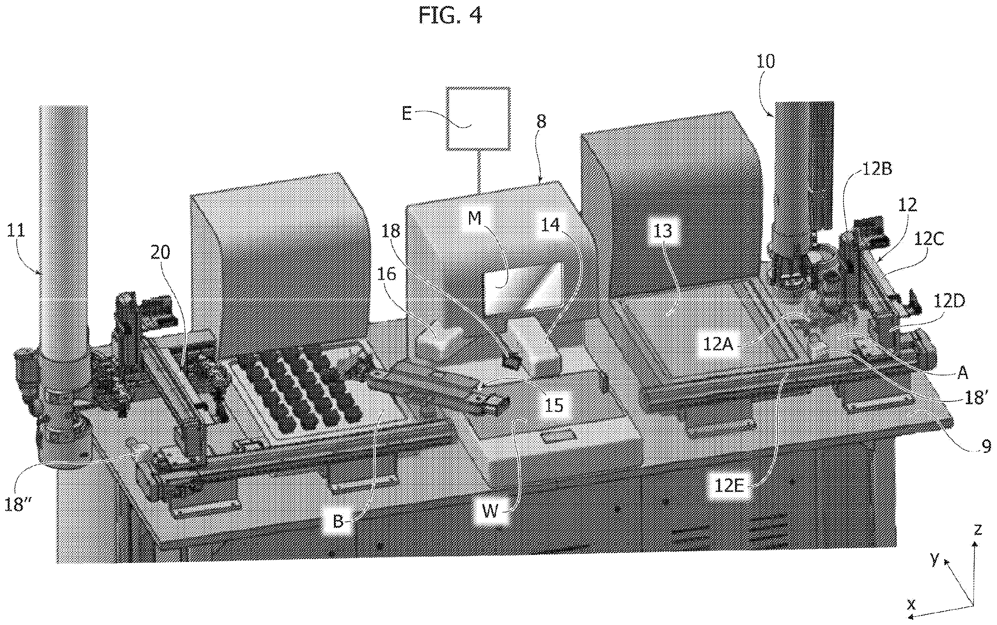

Figure 4 illustrates a perspective view of a first embodiment of a workstation according to the invention. The reference number 8 indicates as a whole the workstation, which comprises a bench 9 on which an input area A is defined, configured to receive from a transport system 10 cassettes 2 containing histological samples.

In a particularly preferred embodiment, automated transport systems are provided upstream and downstream of the workstation 8 according to the invention. The transport system 10 which is arranged upstream feeds cassettes containing histological samples to be analyzed, while a transport system 11 arranged downstream of the workstation feeds histological samples, each embedded in a body of embedding material, to the next station of an automated sample processing line. Figure 4 of the annexed drawings shows an example in which automated transport systems 10, 11 are provided, upstream and downstream of the workstation 8, in the form of pneumatic mail systems. Preferably, these systems are made according to what is described in the Applicant's Italian patent application No. 102021000009788. The construction details of the transport systems 10, 11 are not described here, both as they can be made in any known way, and as they, taken alone, do not fall within the scope of the present invention. It should be noted that the upstream and downstream transport systems, in a less preferable and not illustrated embodiment, can also be manual.

Returning to Figure 4, the transport system upstream of the workstation 8 feeds cassettes 2 of the type illustrated in Figure 1 with one or more histological samples freely arranged within the cassette, each cassette 2 being closed with a respective lid 3.

An advantageous feature of the workstation according to the invention is that it is able to operate, in a totally flexible way, with any known type of cassette.

Furthermore, as will be evident from the following description, in the process and in the workstation according to the invention, the advantage of continuous traceability of each processed sample is achieved, which allows the sample to be associated with the identification information relating thereto throughout all the course of operations performed at the workstation.

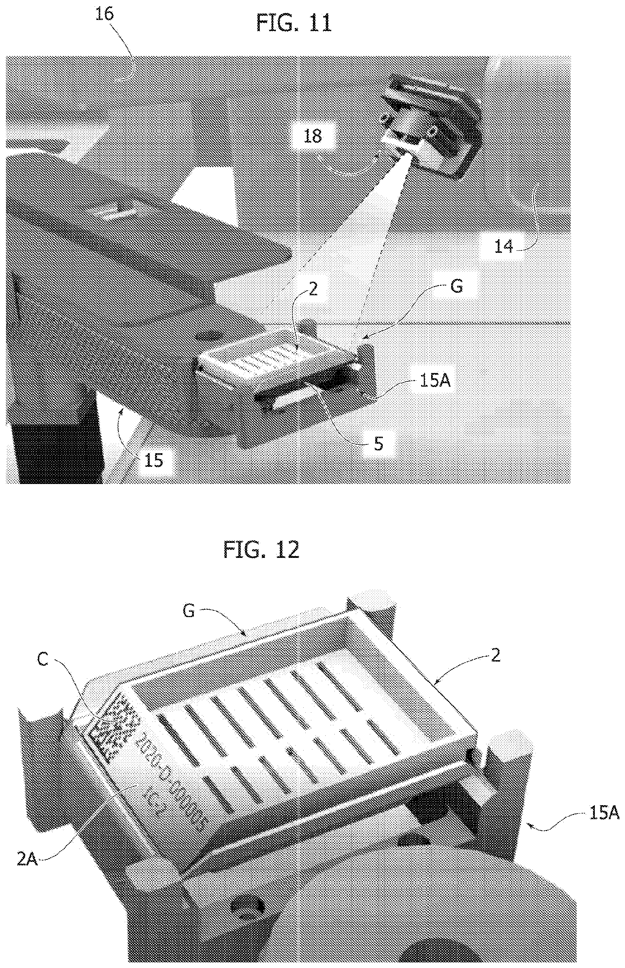

For this purpose, an information carrier is provided on the body of the cassette 2 which carries information associated with the histological sample contained in the cassette. In a preferred example (see Figure 12) the body of the cassette 2 has a surface 2A which is well exposed to the view, carrying an information carrier C, which can be a code of any known type (for example a bar code) but which in the example is a QR code.

The information contained in the code C may include patient identification information, information related for example to the number of samples inserted within the same cassette, information related to the previous processing steps which the sample underwent, information related to the nature of the sample, macroscopic images of the sample and any further information that may be useful to an operator who manually performs, in a working area W downstream of the input area A (Figure 4), the operation of depositing each histological sample in a mould and orienting the sample within the mould.

An electronic controller E (only schematically indicated in Figure 4) is associated to the workstation 8. The electronic controller E is configured and programmed to control all the automated devices of the workstation 8 and to assist the operator working in the working area W.

The cassettes 2, suitably closed with the respective lid 3, which are received in the input area A are picked up by a handling device 12 of any known type and deposited in an accumulation area 13 which, if necessary, can be provided with a system to keep the cassettes in a desired temperature range.

In the illustrated example, the handling device 12 consists of a robot of any known type having a gripping head 12A movable along three axes X, Y, Z orthogonal to each other. In the example shown in Figure 1, the head 12A is movable along the vertical axis Z on a slide 12B sliding on its turn along a horizontal axis Y on guides of a horizontal beam 12C. The horizontal beam 12C in turn protrudes from a slide 12D slidingly mounted along a horizontal axis X on guides carried by a longitudinal bar 12E, fixed to the bench 9.

In a preferred example an optical detection device 18 of any known type, able to detect the code C carried by each cassette 2 so as to allow the electronic controller E to trace the cassette during its entire path through the workstation, can be associated to the input area A or to the handling device 12. In the example of Figure 4, the optical detection device 18' is arranged in a stationary position in the input area A. The handling device 12 can be programmed to pick up a cassette 2 fed by the transport system 10 and to present it in front of the optical detection device 18', in order to allow the reading of the code C, then the handling device 12 itself can temporarily position the cassette in the accumulation area 13.

The workstation is preferably equipped with a monitor M on which the electronic controller E displays the information related to the cassette which is from time to time in the working area W.

A fundamental feature of the present invention lies in the fact that the working area W where the operator works receives only one cassette at a time. As will be seen in more detail below, only when the cycle of operations that must be performed in the working area W on a specific cassette is over, the system enables the feed to the working area W of a new cassette. When the signal indicating the completion of the cycle of operations performed on the cassette located in the working area W is received by the electronic controller E, this last controls the handling device 12 to pick up a specific cassette from the accumulation area 13 and feed it to the working area W.

As will also be described in more detail below, the electronic controller E is configured and programmed to perform a selection ("sorting") of the cassette that must be fed from time to time to the working area W on the basis of the information associated with each cassette, which are detected by means of the optical detection device 18' located at the input area A.

Preferably, after the feeding of the cassette to the working area W, the dimensions and hence the volume occupied by the histological sample contained in the cassette 2 are detected, according to any known measuring or scanning device. Still with reference to Figure 4, in the working area W an operator then manually performs the operations necessary to arrange a histological sample within a respective mould, with an appropriate orientation.

Each time a cassette 2 reaches the working area W, the operator removes the lid 3, picks up the histological sample and places it, with an appropriate orientation, on the bottom 6 of a respective mould 5 (see Figures 2, 3) after having previously poured on the bottom of the mould a first layer of embedding material (typically paraffin) by means of a dispensing device 14.

In particular, the aforementioned mould 5 can be manually chosen by the operator with an appropriate size based on the volume of the histological sample previously detected. On the other hand, according to a preferred solution, the mould 5 can be supplied to the operator automatically, again on the basis of the detected volume of the histological sample, as well as already pre-filled with paraffin in an automated way by the dispensing device 14 according to the size of the bottom 6 of the mould 5 itself.

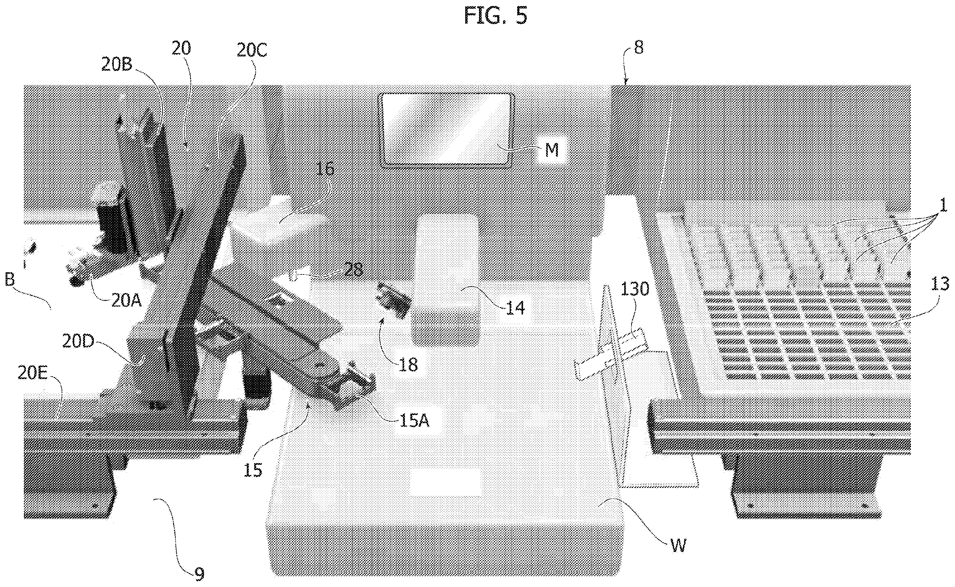

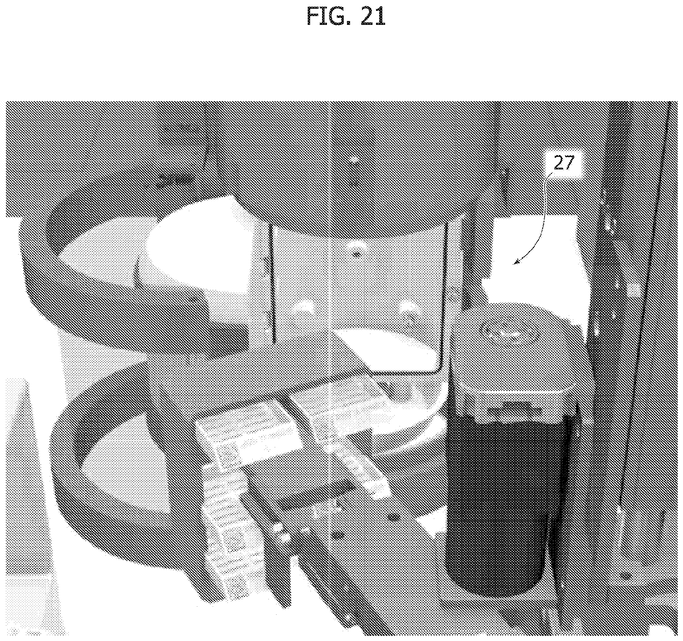

Once the operation of repositioning the histological sample in the mould has been performed, the operator applies the cassette 2 over the mould 5 and places the group thus obtained on a transfer device 15, which will be described in more detail below as well as all the following steps, with reference to figures 5-21.

The transfer device 15 carries the mould 5 containing the histological sample, with the body of the cassette 2 applied above it, to an embedding material dispensing device 16. In the station 16, the mould and the cassette associated with it are filled with embedding material (typically paraffin) maintained in a fluid state. As will also be described in detail below, the dispensing of embedding material is carried out in a controlled and precise way, since a sensor device is associated with the dispensing device 16 to detect the level of the embedding material within the cassette, assisted by an algorithm able to calibrate the dispensing on the basis of a series of parameters known to the electronic controller E from the previous step. Before or after the dispensing device 16 a detection station 18 is provided, able to detect the information associated with the code C carried by the cassette 2.

Again with reference to Figure 4, downstream of the transfer device 15 there is a cooling area B where a handling device 20 provides to deposit the moulds coming from the transfer device 15. All the aforementioned construction details will be described below with reference to Figures 5-21.

Finally, the workstation 8 comprises a system for picking up the moulds from the cooling area B, after the time necessary to obtain the solidification of the embedding material carried by each mould has elapsed. As will also be described in detail below, the workstation comprises a device for detachment of the cooled moulds 5 from the respective cassettes 2, with the solidified embedding material which remains associated with each cassette 2. A transport device provides to feed at the output of the workstation or in an accumulation area the cassettes 2 with associated the bodies of embedding material within which the histological samples are embedded.

Figure 5 shows a further embodiment of the workstation according to the invention. With reference to this example, the accumulation area 13 at the input of the machine comprises a rack in which the handling device 12 positions the cassettes 2 reaching the input area A of the workstation, still closed by the lid 3 (it is always to be considered that the union between the cassette 2 and the respective lid 3 is indicated in the figures with the number 1).

When the electronic controller E receives a signal indicating the completion of the cycle of operations on the cassette which was in the working area W, it enables the feeding to the working area W of a new cassette. In this condition, the handling device 12 brings its gripping head 12A to a predetermined position, to pick up a given cassette 2.

As already indicated above, the electronic controller is configured and programmed to carry out a selection operation ("sorting") of the cassettes 2 so as to feed the cassettes one at a time from the accumulation area 13 to the working area W according to a predetermined sequence, on the basis of the information associated with each cassette (which in this example are detected by means of the optical detection device 18' described above). Therefore, in the aforementioned example, this sorting operation is performed before the intervention of the operator in the working area W.

The criteria followed by the electronic controller to define the most appropriate sequence can be of various types and can be based, for example, both on the information associated with the cassettes and on the need to homogeneously distribute the work to the microtomy stations arranged downstream of the workstation. Basically it is therefore possible to organize and distribute the histological samples to the subsequent processing stations both on the basis of the nature of the analyses to be performed and on the basis of the organizational needs of the laboratory.

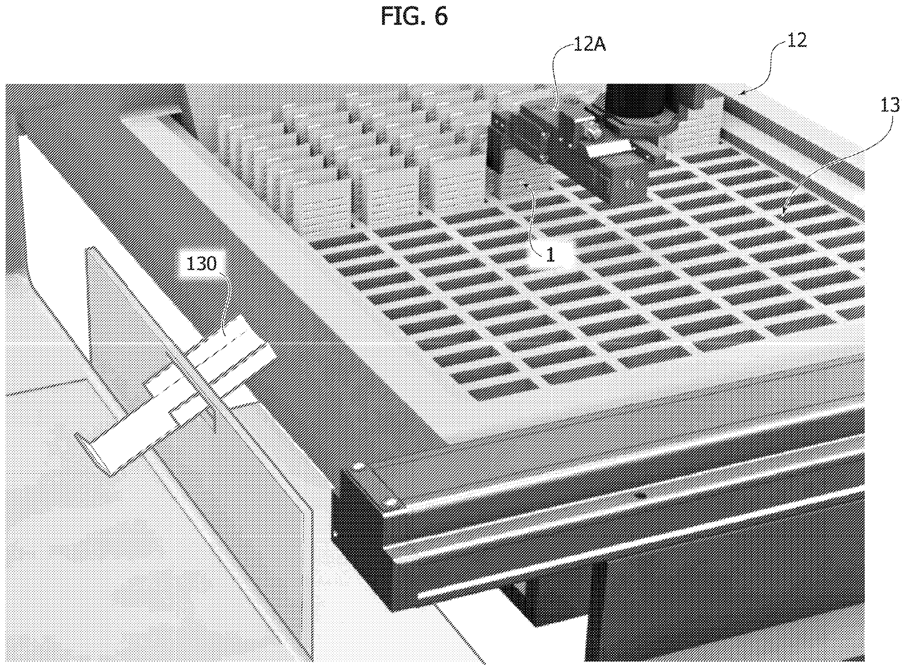

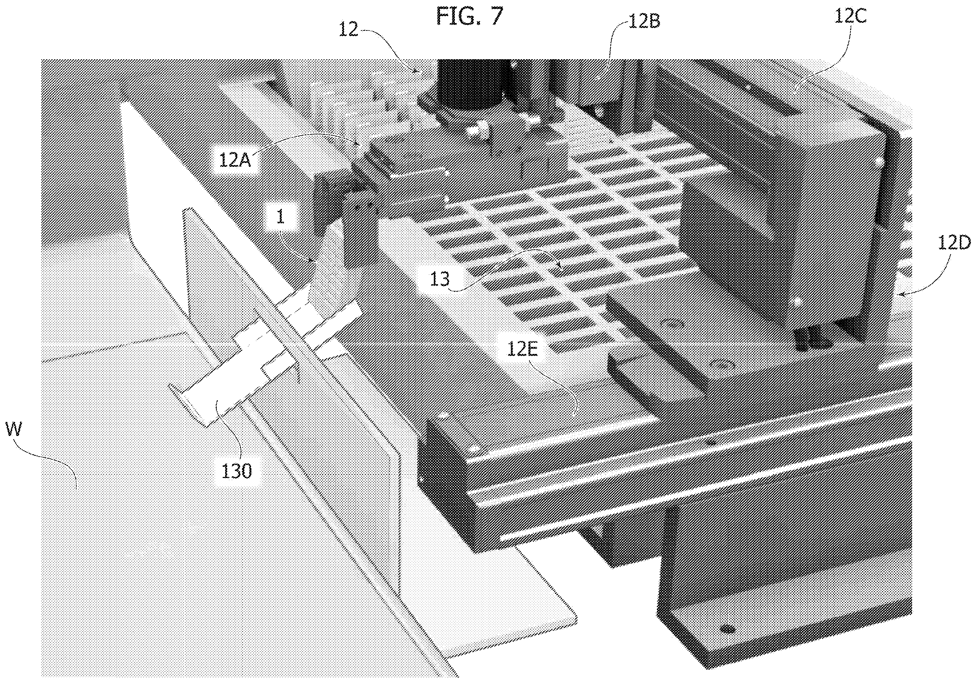

Figure 6 of the annexed drawings shows the step in which the gripping head 12A of the handling device 12 picks up a cassette 2, while figure 7 illustrates the following transfer step of the cassette 2 at the inlet of a chute 130 for feeding the cassette 2 to the working area W.

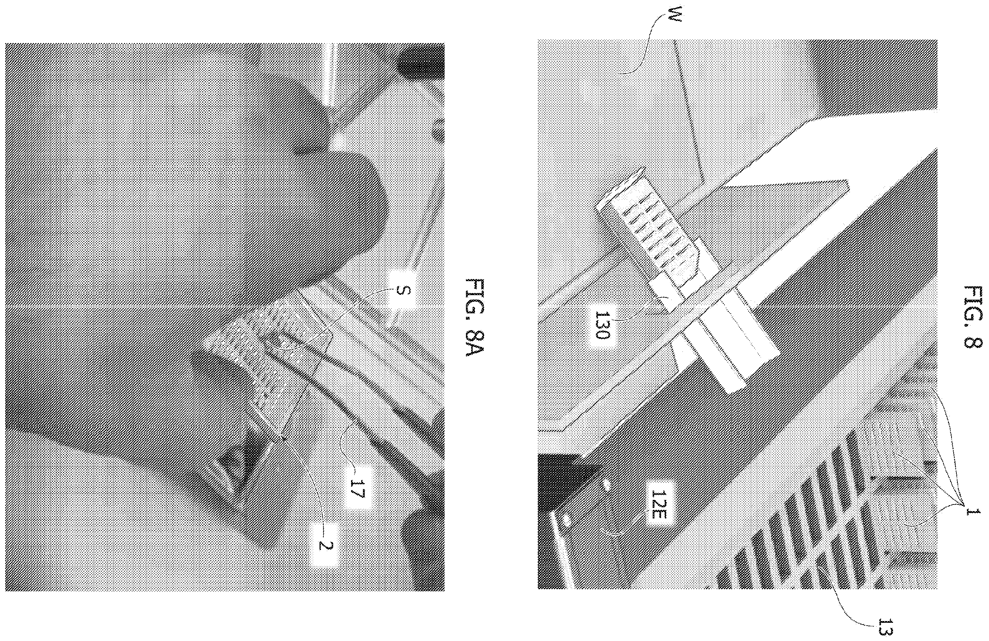

Figure 8 shows cassette 2 at the arrival position in the working area W.

Figure 8A shows the beginning of the manual operations performed by the operator in the working area W. The operator separates the cassette 2 from the lid 3 and picks up a histological sample S contained in the cassette 2 with the help of a tweezer 17. Still with reference to Figure 2, at this point the operator takes from a system for feeding moulds 5 (not shown), which is provided in the working area W, a mould 5 of any type illustrated in Figure 2, having a bottom 6 suitable for the size and shape of the histological sample.

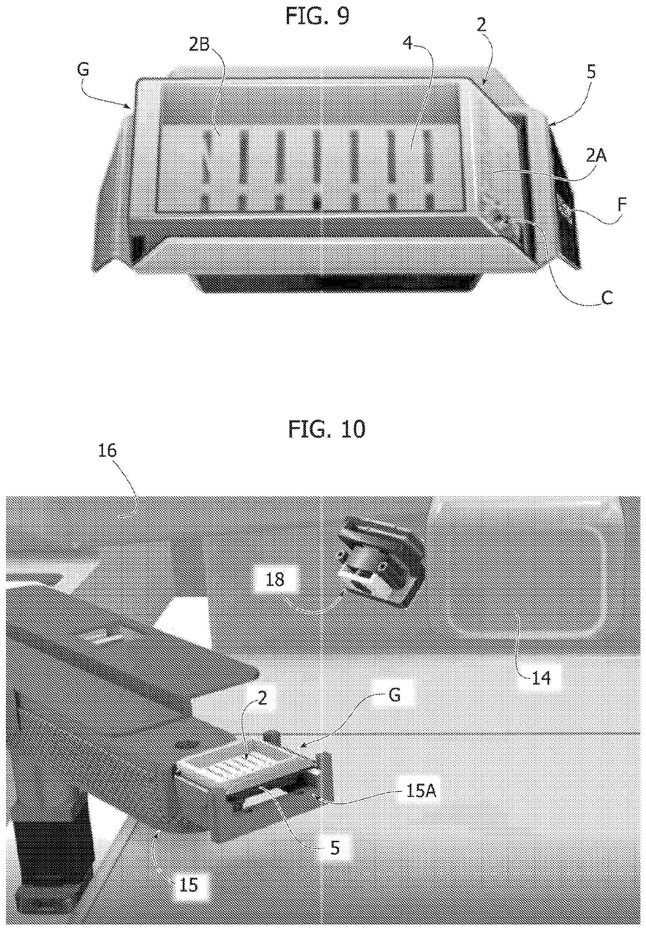

In a further embodiment, the above described system for feeding moulds 5 to the working area W can be of the automatic type, i.e. controlled by the electronic controller E so as to select, on the basis of the detection of the volume of the histological sample S which occurs precisely in this step, by means of the aforementioned known measuring or scanning device (not shown), a mould 5 having a bottom 6 whose size is suitable for the histological sample S to be treated and to feed it directly to the working area W, relieving the operator from the task of having to choose it manually. In particular, the choice of a suitable mould 5 can be made easier by the reading, by such automatic system, of an information carrier F (see figure 9) associated with the mould, i.e. a code (for example, again, a bar code or QR code) identifying the size of the mould itself.

On the bottom 6 of the mould 5 is then deposited, by means of the dispensing device 14 (Figure 5) arranged at the working area W, a first layer of embedding material (paraffin) which is dispensed at a temperature sufficient to keep it in a fluid state. Preferably, this first layer of embedding material is dispensed within the mould 5 in an automated way and in a repeatable quantity controlled by a level sensor of the embedding material, included in the dispensing device 14 (not shown in the figures), as well as calibrated according to the type of mould, i.e. the size of its bottom. In this way the dispensing is interrupted by the electronic controller E, once received by this level sensor a signal indicating the reaching of the correct predetermined level of such first layer of embedding material within the mould 5, and the controller E retains the information, for the specific mould, related to the volume of the first layer of embedding material dispensed. The level sensor can be an optical sensor of any known type, for example operating in reflection, able to measure the distance of the sensor from the free surface of the paraffin layer.

At this point, the operator places the histological sample on the bottom 6, orienting it in the most appropriate way. The orientation is chosen by the operator on the basis of the information provided to him via the monitor M by the electronic controller E relating to the nature of the sample, possibly with the help of macroscopic photographs of the sample, considering the operations to which the sample must be subjected. In particular, the orientation will be chosen in such a way that the cutting operation performed at the microtome downstream of the workstation allows to obtain sections of the sample that are optimal for following analyses.

As can be seen the orientation operation, in the workstation according to the invention, is left to the operator, as it is critical for obtaining the best results of subsequent laboratory analyses. At the same time, the total automation of the operations that precede and follow the manual positioning and orientation of the sample allows to drastically increase the productivity of the laboratory. As already indicated, to these advantages are added further advantages already discussed above, related to the traceability of the sample through the entire path in the workstation and to the possibility of obtaining an extremely precise dosing of the embedding material, so as to avoid trimming operations of the final solidified body of the embedding material containing the histological sample.

Figure 9 of the annexed drawings shows the result of the operations performed by the operator in the working area W. At the end of this cycle of operations in the working area W there is a mould 5 on whose bottom 6 there is the first layer of embedding material dispensed by the dispensing device 14, in which the operator has then placed and oriented the histological sample. As can be seen in Figure 9, the body of the cassette 2 is applied above the mould 5 as a lid. The mould 5 and the body of the cassette 2 therefore have dimensions suitable for this purpose. As also visible in Figure 9, the body of the cassette 2 defines a cavity 2B intended to be filled with embedding material, whose bottom wall 4 has pass-through openings, as previously indicated, so as to allow the passage of the embedding material which is poured within the cavity 2B into the underlying mould 5. As can also be seen in Figure 9, the inclined end surface 2A of the body of the cassette 2, bearing the code C, remains in a position exposed to view.

With reference again to Figure 5 and Figure 10, the drawings illustrate purely by way of example an embodiment of the transfer device 15, where such transfer device comprises a belt conveyor which moves along a closed loop path in a horizontal plane supports 15A, each configured and sized to receive above itself a group G (Figure 9) defined by a mould 5 containing a histological sample and the associated body of the cassette 2 applied above it.

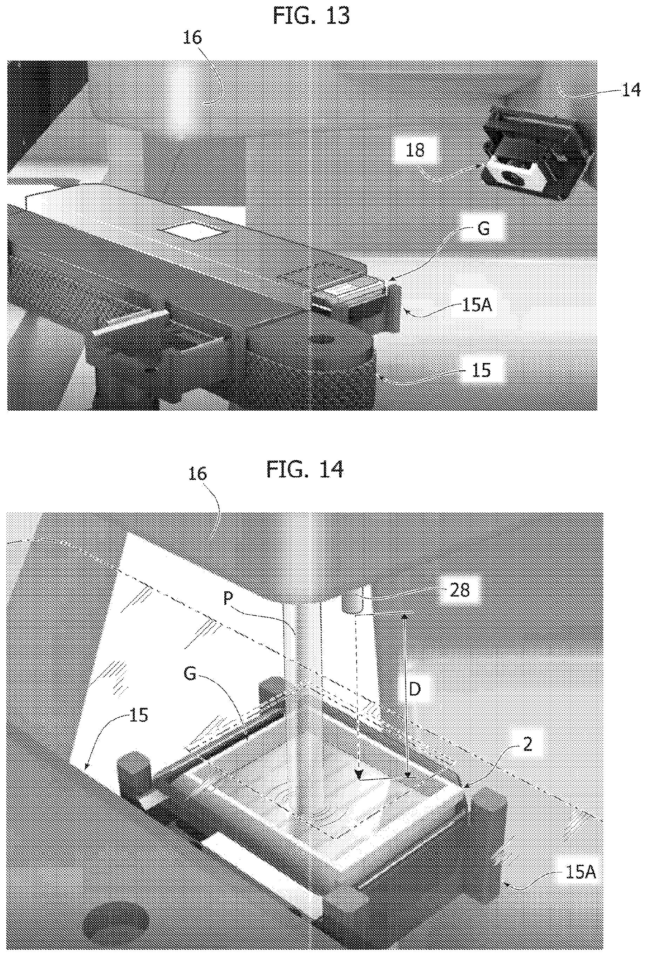

The transfer device 15 stops a support 15A in a position ready to receive a new group G (Figure 5). Figure 10 shows the step in which a group G has been positioned within the support 15A which is in the waiting position. At this point, the electronic controller E controls the movement of the transfer device 15, which at first moves the group G in front of the detection station 18 (Figure 11) for the detection of the information contained in the code C (Figure 12) and later below the station 16 for dispensing the embedding material (Figure 14). The detection station 18 can comprise an optical detector of any known type.

Figure 13 shows a step in which a group G is in transfer towards the dispensing device 16, after being passed in front of the detection station 18.

In an example, the electronic controller E is programmed to enable the feeding to the working area W of a new cassette by the handling device 12, when it receives, from the detection station 18 downstream of the working area W, a signal which indicates the detection by the latter of the code C of the cassette, coming from the working area W, which is located in front of the detection station 18, and which acts as a signal of completion of the cycle of operations on the cassette itself in the working area W. Naturally, the enable signal to the feeding of a new cassette in the working area W could be obtained in any other way, or be activated by the operator itself, without prejudice to the principle of feeding the cassettes to the working area W one at a time.

Figure 14 shows the step in which the body of the cassette 2, which is in position below the dispensing device 16, is stopped in this position to receive a flow of embedding material P, which is at a sufficient temperature to keep it in a fluid state. The dispensing device 16 is substantially constituted by a tap controlled by a solenoid valve which is controlled by the electronic controller E of the workstation on the basis of the feedback signal sent by a sensor 28 associated with the dispensing device 16. The sensor 28 is a sensor able to detect the level of embedding material P, and can be an optical sensor of any known type, for example operating in reflection, able to measure the distance of the sensor itself with respect to the free surface of the fluid of embedding material P poured into the cassette 2. The signal emitted by the sensor 28 can also be displayed on a monitor in the form of a numerical indication of the distance D between the sensor and the free surface of the embedding material P. During the dispensing step, the distance D progressively decreases until a predetermined value is reached, corresponding to the correct quantity of embedding material, which is predetermined according to the size of the cassette 2 and the mould 5 arranged below the cassette 2. The electronic controller E is therefore able to close the solenoid valve that controls the dispensing of the embedding material and consequently stop the dispensing of the material P when a correct quantity is reached, i.e. a predetermined level of the material P within the cassette 2. During this dispensing operation, the electronic controller E takes into account, by means of a specific algorithm, the information it previously had on the volume occupied by the histological sample S within the mould 5, as well as on the dimensions of the bottom 6 of the mould 5 itself and then on the volume of the first layer of embedding material dispensed by the dispensing device 14, in order to adequately calibrate the dispensing of the appropriate amount of embedding material P to reach the aforementioned predetermined level. As already illustrated above, thanks to the reaching of the correct quantity of embedding material P and to the automated handling, in the following processing step, when the embedding material P has solidified, the body obtained must not be trimmed, as it already has the correct size to be then received in a downstream microtome.

Basically, it is achieved a total control, till the last drop, of the volume of embedding material dispensed by both the dispensing devices 14 and 16, calibrating everything according to the volume of the histological sample S to be embedded and therefore to the dimensions of the bottom 6 of the mould 5 that receives it. Essentially, the accuracy in dispensing the correct amount of embedding material is ensured by the combination of two controls, one on the appropriate volume of embedding material to be dispensed, the other on the reaching of the predetermined level of embedding material, both within the mould 5 (for the first layer of embedding material) and within the associated cassette 2 (for the embedding material P).

Returning to Figure 5, the reference number 20 indicates a handling device of any known type, for example similar to the handling device 12 associated with the input area A, for picking up each group G, consisting of a mould with the associated cassette now filled with embedding material, coming from the transfer device 15 and for positioning it in the cooling area B. Naturally, also the handling device 20 is controlled by the electronic controller E. Even in this case, therefore, the handling device 20 can comprise a gripping head 20A movable along a vertical axis Z on a slide 20B which slides on a beam 20C in a horizontal direction Y. The beam 20C protrudes from a slide 20D which is slidably mounted along a horizontal direction X on a beam 20E secured to the bench 9.

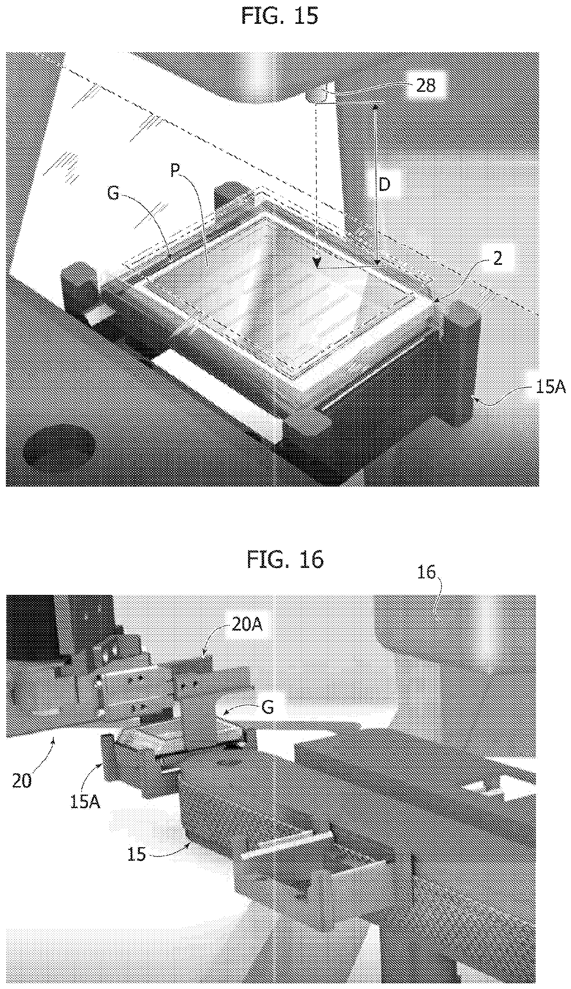

Naturally, both the configuration of the handling devices 12 and 20 and the configuration of the transfer device 15 could vary widely. As an alternative to the examples used, it is therefore possible to adopt handling and transfer devices of any other known type. Figure 16 shows the step in which the transfer device 15 stops in a condition in which a group G, coming from the dispensing device of the embedding material, is in the waiting position, to be picked up by the gripping head 20A of the handling device 20.

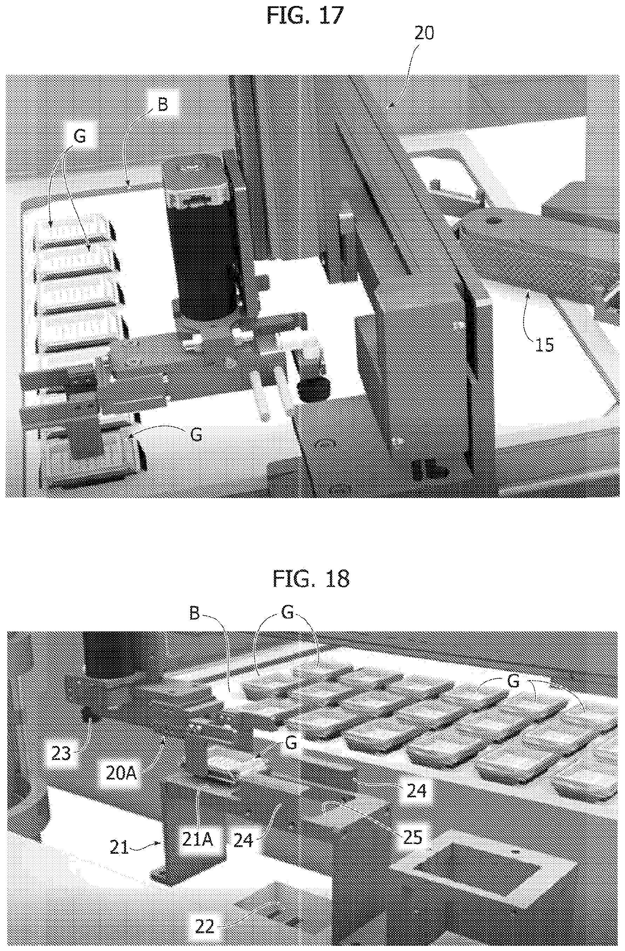

Figure 17 shows the next step in which the handling device 20 places the picked up group G on a cooled metal plate, in the cooling area B.

Figure 18 shows the cooling area B with the groups G deposited therein, while the handling device 20 carries an already cooled group G to a station 21 where it is carried out the detachment of the mould 5 from the solidified body of embedding material P, containing the histological sample inside. It should be noted that, in an alternative embodiment not shown, the handling device could be a different handling device with respect to the handling device 20. It is in any case a handling device naturally controlled by the electronic controller E.

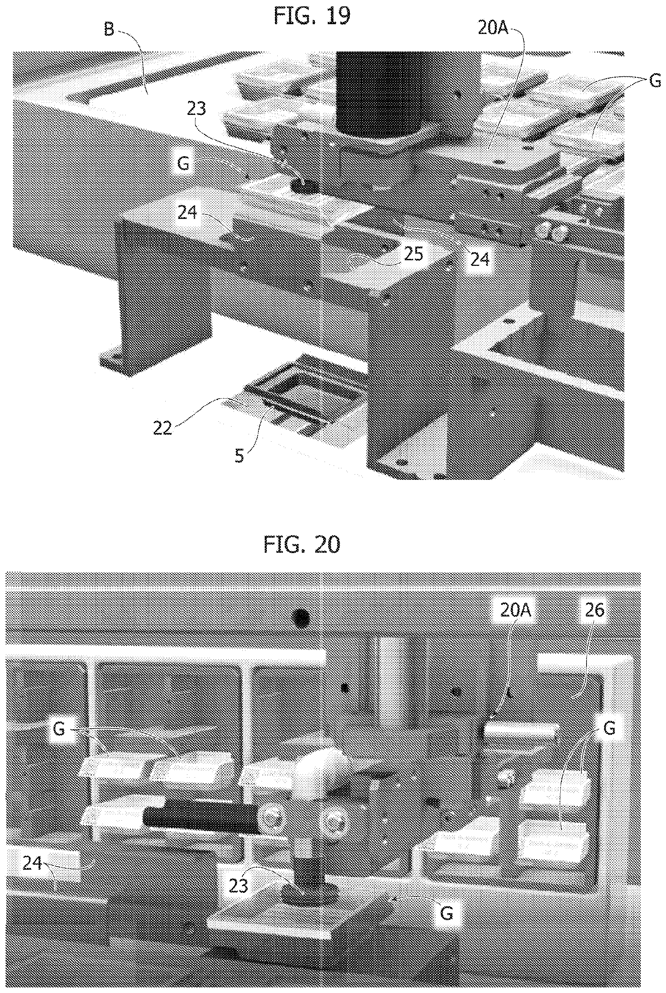

Following the aforementioned detachment, the mould 5 falls into a pit 22 where it is retrieved by an automatic transport system for retrieval of the moulds, while the solidified body of the embedding material remains adhered to the body of the respective cassette 2. In the illustrated example, the gripping head 20A of the handling device 20 temporarily places the group G on a horizontal support wall 21A, after which it releases the group G. The head 20A is rotated around a vertical axis to carry a gripping device 23, which always belongs to the head 20A, to engage the upper surface of the solidified body of embedding material P belonging to the group G. By means of the gripping device 23, the head 20A brings the group G above the pit 22, between two brackets 24 carried by the supporting wall 21A at the two sides of an opening 25 of the wall 21A. The two brackets 24 have upper edges folded horizontally. When the gripping device 23 has brought the group G above the opening 25 and between the two brackets 24, the detachment of the mould can already occur naturally by gravity, but if necessary the gripping device 23 moves slightly upwards the group G in such a way that the opposite edges of the mould 5 are held by the folded edges of the brackets 24, which causes the mould 5 to fall into the pit 22 passing through the opening 25, while the group G constituted by the solidified body 7 of embedding material P with the cassette 2 associated therewith remains joined to the gripping device 23 (Figure 19). In this condition, the electronic controller E can control the handling device 20 to transfer the group G to an accumulation area 26 of the groups G (Figure 20) or directly to an output area U of the workstation, connected to the inlet 27 of an automated transport system 11 downstream of the workstation. In the event of the stop in an accumulation area 26, the handling device 20 then provides from time to time to feed the groups G from the accumulation area 26 towards the output area U of the workstation, i.e. substantially towards the inlet 27 of the transport system 11. The cassettes can typically be grouped for homogeneity of subsequent destination. In any case, also in this step a selection ("sorting") operation can be performed, which can be correlated to the sorting operation performed upstream of the working area W and which can be identically assisted by an optical detection device 18" (Figure 4) associated with the handling device 20 or arranged in a stationary position in the output area of the workstation and able to detect the code C carried by each cassette 2. In the example illustrated in Figure 4 the optical detection device 18" is in a stationary position and is able to detect the code C of a cassette carried in front of it by the handling device 20.

The detached moulds 5 which are received in the pit 22 can be retrieved by an automatic transport system, unless they are of the disposable type. The automatic transport system can feed the moulds through a cleaning station, to remove the residues of the embedding material, and then convey them back to the feeding system of the moulds 5 to the working area W.

Naturally, the principle of the invention remaining the same, the details of construction and the embodiments may vary widely with respect to those described and illustrated purely by way of example, without thereby departing from the scope of the present invention, as defined in the attached claims.

## Claims

1. Automated workstation, for embedding histological samples (S) with embedding material (P), the workstation comprising:
- an input area (A) for histological samples intended to undergo an embedding operation, configured to receive and accumulate in an automated way, from a transport system (10), cassettes (2) containing histological samples (S),
wherein each cassette (2) comprises a body bearing an information carrier (C) with information associated with the histological sample (S) which is contained within the cassette (2),
- a first detection device (18') arranged within said input area (A) and configured to detect the information of the information carrier (C) of each one of the cassettes (2) located within the input area (A),
- a first handling device (12) next to said input area (A) and to a working area (W), and configured and programmed to pick up the cassettes (2) containing the histological samples (S) from said input area (A) and to feed them, one at a time, to said working area (W),
- an electronic controller (E) of said workstation, configured and programmed to:
- receive from said detection device (18'), and store, the information associated with the histological sample of each of the cassettes (2) located within the input area (A),
- control said first handling device (12), so as to feed, one at a time, the cassettes (2) containing the histological samples (S) from said input area (A) to said working area (W), according to a priority sequence determined in real time as a function of the aforementioned information associated with the histological samples (S) of the cassettes (2),
wherein a first embedding material dispensing device (14), which can be used to dispense a first layer of embedding material within the selected mould (5), is associated with said working area,
said workstation further comprising:
- a transfer device (15) to transfer the cassettes (2) out of the working area, and
- a cooling area (B) arranged downstream of said transfer device (15),
said workstation being **characterized in that**:
- the workstation is a workstation for an operator, comprising a workbench for an operator, defining said working area (W) for said operator,
- said input area (A) is placed on one side of the working area (W) of the operator defined by said workbench,
- said first handling device (12) is configured to feed the cassettes (2) containing the histological samples (S) to said working area (W) of the operator defined by said workbench, each cassette (2) being closed with a removable lid (3),
- said electronic controller (E) is configured for enabling the feeding of each new cassette (2) from said input area (A) to said working area (W) of the operator defined by the workbench only after receiving a signal which indicates that the working area (W) of the operator is free to receive a new cassette (2),
- said working area (W) of the operator defined by said workbench is provided with a plurality of embedding moulds (5), so that the operator can select each time a suitable mould (5), according to the size of the histological sample contained in each new cassette (2) that reaches the working area (W) of the operator,
and so that, for each new cassette (2) reaching the working area (W), the operator removes the lid (3) of the cassette, removes the histological sample (S) from the cassette (2), detects the volume of the histological sample, consequently selects a mould (5), obtains the dispensing of a first layer of embedding material within the selected mould (5) by means of said first dispensing device (14), placing the histological sample (S), with a selected orientation, within the mould (5) and over the first layer of embedding material (P), and then applies the cassette (2) over the mould (5) containing the histological sample (S) thus oriented,
- the transfer device to transfer the cassettes out of the working area is arranged on one side of the working area (W) defined by said workbench, on the opposite side with respect to said input area (A), said transfer device (15) being configured to receive, one at a time, from the operator, the moulds (5) containing the oriented histological samples (S), each mould with the respective cassette (2) applied thereon,
- said workstation further comprising:
- a second detection device (18) associated with said transfer device (15) and arranged and configured to detect the information carried by the information carrier (C) of each cassette (2) transported by said transfer device (15), and to send to said electronic controller (E) a signal which indicates the passage of each new cassette (2) on the transfer device (15), such signal being used as a signal which indicates that the working area (W) of the operator is free to receive a new cassette from the input area (A), and
- a second embedding material dispensing device (16) associated with said transfer device (15), and configured to fill, in a controlled manner, each mould (5) carried by said transfer device (15), and the associated cassette (2) placed thereon, with a volume of embedding material (P), said second dispensing device (16) being servo-controlled by said electronic controller (E) on the basis of the signal of a sensor (28) able to detect the level of the embedding material (P) within the mould (5) and the associated cassette (2), in such a way that the dispensing of said embedding material (P) is interrupted when a predetermined level of embedding material (P) within the mould (5) and the associated cassette (2) has been reached,
and wherein said cooling area (B) is configured to receive and accumulate in an automated way the moulds (5) coming from said transfer device (15), each one with the respective histological sample covered by the embedding material and the respective cassette (2) applied on the mould (5), in such a way that in said cooling area the embedding material (P) containing each histological sample (S) forms a solidified body (7), in which the histological sample is embedded.

2. Workstation according to claim 1, **characterized in that** it further comprises a second handling device (20), to pick up from the transfer device (15) each mould (5) and the associated cassette (2), which are filled with embedding material (P), and to deposit them at said cooling area (B).

3. Workstation according to claim 2, **characterized in that** it comprises a third handling device, constituted by said second handling device (20) or by a further handling device, configured and programmed to pick up a cassette (2) and the solidified body (7) of embedding material (P) adhering thereto, together with the associated mould (5), after they have been cooled at said cooling area (B), and to feed them at first to a station for detachment of each mould (5) from the solidified body (7) adhering to the cassette (2) and thereafter to an output area (U) of the workstation which is configured for delivering the cassettes (2), with the associated solidified bodies (7) in which the histological samples (S) are embedded, to a transport system (11).

4. Workstation according to claim 1, **characterized in that** said working area (W) is equipped with a monitor (M) for displaying the information contained in the information carrier (C) of the cassette (2) located at the working area (W) to the operator.

5. Workstation according to claim 1, **characterized in that** the working area (W) is provided with a mould feeding system, for feeding moulds (5) to the working area (W).

6. Workstation according to claim 4, **characterized in that** said mould feeding system for feeding the moulds (5) is controlled by said electronic controller (E) in such a way as to select, on the basis of the information contained in the information carrier (C) of the cassette (2) located at the working area (W) and after detection of the size of the histological sample (S) which is within the cassette (2), a mould (5) of a type suitable for the histological sample (S) to be processed and to feed this mould to the working area (W).

7. Workstation according to claim 1, **characterized in that** the first embedding material dispensing station (14) for dispensing a first layer of embedding material within the mould (5) is servo-controlled by said electronic controller (E) on the basis of the signal of a sensor able to detect the level of the embedding material (P) within the mould (5), in such a way that the dispensing of said embedding material (P) is interrupted when a predetermined level of said first layer of embedding material (P) within the mould (5) has been reached.

8. Workstation according to claim 2, **characterized in that** it comprises an automatic transport system for retrieval of the moulds (5) after their detachment from the respective solidified body (7) of embedding material (P) and from the associated cassette (2), and for feeding the retrieved moulds (5), through a cleaning station, back to the working area (W).

9. Process for embedding histological samples (S) within an embedding material (P), comprising the steps of:
- receiving, and accumulating, in an automated way from a transport system (10), at an input area (A), cassettes (2) containing histological samples (S) intended to undergo an embedding operation,
wherein each cassette (2) comprises a body bearing an information carrier (C) with information associated with the histological sample (S) which is contained within the cassette (2),
- detecting, by means of a first detection device (18') arranged within said input area (A), the information of the information carrier (C) of each one of the cassettes (2) located within the input area (A),
- by means of an electronic controller (E) of said workstation, receiving from said detection device (18'), and storing, the information associated with the histological sample of each of the cassettes (2) located within the input area (A),
- controlling, by means of said electronic controller (E), a first handling device (12) so as to feed, one at a time, the cassettes (2) containing the histological samples (S) from said input area (A) to said working area (W), according to a priority sequence determined in real time as a function of the aforementioned information associated with the histological samples (S) of the cassettes (2),
wherein a first embedding material dispensing device (14), which can be used to dispense a first layer of embedding material within the selected mould (5), is associated with said working area (W),
- providing a cooling area (B) downstream of said transfer device (15),
said process being **characterized in that**:
- a workbench for an operator is provided, which defines a working area (W) for an operator,
- said input area (A) is placed on one side of the working area (W) of the operator defined by said workbench,
- said first handling device (12) is configured to feed the cassettes (2) containing the histological samples (S) to said working area (W) of the operator defined by said workbench, each cassette (2) being closed with a removable lid (3),
- the feeding of each new cassette (2) from said input area (A) to said working area (W) of the operator defined by the workbench is enabled by the electronic controller (E) only after receiving a signal which indicates that the working area (W) of the operator is free to receive a new cassette (2),
- wherein said working area (W) of the operator is provided with a plurality of embedding moulds (5), so that the operator can select each time a suitable mould (5), according to the size of the histological sample contained in each new cassette (2) that reaches the working area (W) of the operator defined by the workbench,
wherein, for each new cassette (2) reaching the working area (W), the operator removes the lid (3) and removes the histological sample (S) from the cassette (2), detects the size of the histological sample, consequently selects a mould (5), obtains the dispensing of a first layer of embedding material within the selected mould (5) by means of said first dispensing device (14), places the histological sample (S), with a selected orientation, within the mould (5) and over the first layer of embedding material (P), and then applies the cassette (2) over the mould (5) containing the histological sample (S) thus oriented,
- wherein the operator furthermore deposits, one at a time, the moulds (5) containing the oriented histological samples (S), each mould with the respective cassette (2) applied thereon, on a transfer device (15) located on one side of the working area (W), on the opposite side with respect to said input area (A), which transfers the cassettes (2) out of the working area,
the process further comprising the steps of:
- detecting, by means of a second detection device (18) associated with said transfer device (15), the information carried by the information carrier (C) of each cassette (2) transported by said transfer device (15), and
- sending to said electronic controller (E) a signal which indicates the passage of each new cassette (2) on the transfer device (15), such signal being used as a signal which indicates that the working area (W) of the operator is free to receive a new cassette from the input area (A), and
- transporting each mould (5) and the associated cassette (2) placed thereon, by means of said transfer device (15), to a second embedding material dispensing device (16), where the mould (5) and the associated cassette (2) are filled, in a controlled manner, with a volume of embedding material (P), said second dispensing device (16) being servo-controlled by said electronic controller (E) on the basis of the signal of a sensor (28) able to detect the level of the embedding material (P) within the mould (5) and the associated cassette (2), in such a way that the dispensing of said embedding material (P) is interrupted when a predetermined level of embedding material (P) within the mould (5) and the associated cassette (2) has been reached, and
receiving and accumulating in an automated way, in said cooling area (B), the moulds (5) coming from said transfer device (15), each one with the respective histological sample covered by the embedding material and the respective cassette (2) applied on the mould (5), in such a way that the embedding material (P) containing each histological sample (S) forms a solidified body (7) in which the histological sample is embedded.

10. Process according to claim 9, **characterized in that** it further comprises the step of picking up, by means of a second handling device (20), each mould (5) and the associated cassette (2) from the transfer device (15), downstream of the second embedding material dispensing device (16), and depositing the mould (5) with the associated cassette (2) at said cooling area (B).

11. Process according to claim 10, **characterized in that** it further comprises the steps of:
- picking up, after they have been cooled at said cooling area (B), and by means of a third handling device, constituted by the second handling device (20) or by a further handling device, a cassette (2) and the solidified body (7) of embedding material (P) adhering thereto, together with the associated mould (5), and to feed them at first to a station for detachment of each mould (5) from the solidified body (7) adhering to the cassette (2), and thereafter to an output area (U),
- delivering, from said output area (U) to a transport system (11), the cassettes (2) with the associated solidified bodies (7) in which the histological samples (S) are embedded.

12. Process according to claim 9, **characterized in that** at said working area (W) an operator selects the orientation to be given to the histological sample (S) placed within the mould (5) on the basis of the information contained in the information carrier (C) of the cassette (2) located at the working area (W), which information is made available on a monitor (M) with which the working area (W) is equipped.

13. Process according to claim 9, **characterized in that** it comprises providing a mould feeding system for feeding moulds (5) to the working area (W), which system is able to select, on the basis of the information contained in the information carrier (C) of the cassette (2) located at the working area (W), and after detection of the volume of the histological sample (S) which is within the cassette (2), a mould (5) of a type suitable for the histological sample (S) to be processed and to feed this mould to the working area (W).

14. Process according to claim 9, **characterized in that** it comprises calibrating the dispensing operation of a first layer of embedding material within the mould (5) which is being processed at the working area (W), on the basis of the size of the mould (5), and interrupting dispensing upon reaching a predetermined level of said first layer of embedding material within the mould (5).

15. Process according to claim 10, **characterized in that** the moulds (5) are retrieved, after their detachment from the respective solidified body (7) of embedding material (P) and from the associated cassette (2), by means of an automatic transport system which feeds the retrieved moulds, through a cleaning station, back to the working area (W).

## Patentansprüche

1. Automatisierte Arbeitsstation zum Einbetten histologischer Proben (S) mit Einbettmaterial (P), wobei die Arbeitsstation umfasst:
- einen Eingabebereich (A) für histologische Proben, die einer Einbettoperation unterzogen werden sollen, der konfiguriert ist, um auf automatisierte Weise von einem Transportsystem (10) Kassetten (2), die histologische Proben (S) enthalten, aufzunehmen und anzusammeln,
wobei jede Kassette (2) einen Körper umfasst, der einen Informationsträger (C) mit Informationen trägt, die der histologischen Probe (S) zugeordnet sind, die in der Kassette (2) enthalten ist,
- eine erste Erfassungsvorrichtung (18'), die innerhalb besagten Eingabebereichs (A) angeordnet und konfiguriert ist, um die Informationen des Informationsträgers (C) jeder der Kassetten (2), die sich innerhalb des Eingabebereichs (A) befinden, zu erfassen,
- eine erste Handhabungsvorrichtung (12) neben besagtem Eingabebereich (A) und einem Arbeitsbereich (W), die konfiguriert und programmiert ist, um die Kassetten (2), die die histologischen Proben (S) enthalten, von besagtem Eingabebereich (A) aufzunehmen und sie einzeln zu besagtem Arbeitsbereich (W) zuzuführen,
- eine elektronische Steuerung (E) besagter Arbeitsstation, die konfiguriert und programmiert ist, um:
- von besagter Erfassungsvorrichtung (18') die Informationen zu empfangen und zu speichern, die der histologischen Probe jeder der Kassetten (2), die sich innerhalb des Eingabebereichs (A) befinden, zugeordnet sind,
- besagte erste Handhabungsvorrichtung (12) so zu steuern, dass die Kassetten (2), die die histologischen Proben (S) enthalten, einzeln von besagtem Eingabebereich (A) zu besagtem Arbeitsbereich (W) gemäß einer in Echtzeit bestimmten Prioritätssequenz zugeführt werden, die als Funktion der vorgenannten, den histologischen Proben (S) der Kassetten (2) zugeordneten Informationen bestimmt wird,
wobei mit besagtem Arbeitsbereich eine erste Einbettmaterial-Abgabevorrichtung (14) verbunden ist, die verwendet werden kann, um eine erste Schicht Einbettmaterial innerhalb der ausgewählten Form (5) abzugeben,
wobei besagte Arbeitsstation ferner umfasst:
- eine Transfervorrichtung (15) zum Transferieren der Kassetten (2) aus dem Arbeitsbereich, und
- einen Kühlbereich (B), der stromabwärts von besagter Transfervorrichtung (15) angeordnet ist,
wobei besagte Arbeitsstation **dadurch gekennzeichnet ist, dass**:
- die Arbeitsstation eine Arbeitsstation für einen Bediener ist, die einen Arbeitstisch für einen Bediener umfasst, der besagten Arbeitsbereich (W) für besagten Bediener definiert,
- besagter Eingabebereich (A) auf einer Seite des Arbeitsbereichs (W) des Bedieners angeordnet ist, der durch besagten Arbeitstisch definiert ist,
- besagte erste Handhabungsvorrichtung (12) konfiguriert ist, um die Kassetten (2), die die histologischen Proben (S) enthalten, zu besagtem Arbeitsbereich (W) des Bedieners, der durch besagten Arbeitstisch definiert ist, zuzuführen, wobei jede Kassette (2) mit einem abnehmbaren Deckel (3) verschlossen ist,
- besagte elektronische Steuerung (E) konfiguriert ist, um die Zuführung jeder neuen Kassette (2) von besagtem Eingabebereich (A) zu besagtem Arbeitsbereich (W) des Bedieners, der durch den Arbeitstisch definiert ist, erst nach Empfang eines Signals zu ermöglichen, das anzeigt, dass der Arbeitsbereich (W) des Bedieners frei ist, um eine neue Kassette (2) zu empfangen,
- besagter Arbeitsbereich (W) des Bedieners, der durch besagten Arbeitstisch definiert ist, mit einer Vielzahl von Einbettformen (5) ausgestattet ist, so dass der Bediener jedes Mal eine geeignete Form (5) entsprechend der Größe der histologischen Probe auswählen kann, die in jeder neuen Kassette (2) enthalten ist, die den Arbeitsbereich (W) des Bedieners erreicht,
und so, dass für jede neue Kassette (2), die den Arbeitsbereich (W) erreicht, der Bediener den Deckel (3) der Kassette entfernt, die histologische Probe (S) aus der Kassette (2) entnimmt, das Volumen der histologischen Probe erfasst, folglich eine Form (5) auswählt, die Abgabe einer ersten Schicht Einbettmaterial innerhalb der ausgewählten Form (5) mittels besagter ersten Abgabevorrichtung (14) veranlasst, die histologische Probe (S) mit einer ausgewählten Orientierung innerhalb der Form (5) und über der ersten Schicht Einbettmaterial (P) platziert und dann die Kassette (2) über die Form (5) anbringt, die die so orientierte histologische Probe (S) enthält,
- die Transfervorrichtung zum Transferieren der Kassetten aus dem Arbeitsbereich auf einer Seite des Arbeitsbereichs (W) angeordnet ist, der durch besagten Arbeitstisch definiert ist, auf der gegenüberliegenden Seite in Bezug auf besagten Eingabebereich (A), wobei besagte Transfervorrichtung (15) konfiguriert ist, um einzeln vom Bediener die Formen (5), die die orientierten histologischen Proben (S) enthalten, jede Form mit der jeweiligen darauf angebrachten Kassette (2), zu empfangen,
- besagte Arbeitsstation ferner umfasst:
- eine zweite Erfassungsvorrichtung (18), die mit besagter Transfervorrichtung (15) verbunden und angeordnet und konfiguriert ist, um die Informationen zu erfassen, die vom Informationsträger (C) jeder Kassette (2) getragen werden, die von besagter Transfervorrichtung (15) transportiert wird, und um an besagte elektronische Steuerung (E) ein Signal zu senden, das den Durchgang jeder neuen Kassette (2) auf der Transfervorrichtung (15) anzeigt, wobei ein solches Signal als Signal verwendet wird, das anzeigt, dass der Arbeitsbereich (W) des Bedieners frei ist, um eine neue Kassette vom Eingabebereich (A) zu empfangen, und
- eine zweite Einbettmaterial-Abgabevorrichtung (16), die mit besagter Transfervorrichtung (15) verbunden und konfiguriert ist, um jede von besagter Transfervorrichtung (15) getragene Form (5) und die darauf platzierte zugehörige Kassette (2) auf kontrollierte Weise mit einem Volumen Einbettmaterial (P) zu füllen, wobei besagte zweite Abgabevorrichtung (16) durch besagte elektronische Steuerung (E) auf der Grundlage des Signals eines Sensors (28) nachgeführt wird, der den Füllstand des Einbettmaterials (P) innerhalb der Form (5) und der zugehörigen Kassette (2) erfassen kann, so dass die Abgabe besagten Einbettmaterials (P) unterbrochen wird, wenn ein vorbestimmter Füllstand des Einbettmaterials (P) innerhalb der Form (5) und der zugehörigen Kassette (2) erreicht wurde,
und wobei besagter Kühlbereich (B) konfiguriert ist, um auf automatisierte Weise die von besagter Transfervorrichtung (15) kommenden Formen (5), jede mit der jeweiligen, vom Einbettmaterial bedeckten histologischen Probe und der jeweiligen, auf der Form (5) angebrachten Kassette (2), aufzunehmen und anzusammeln, so dass in besagtem Kühlbereich das Einbettmaterial (P), das jede histologische Probe (S) enthält, einen erstarrten Körper (7) bildet, in dem die histologische Probe eingebettet ist.

2. Arbeitsstation nach Anspruch 1, **dadurch gekennzeichnet, dass** sie ferner eine zweite Handhabungsvorrichtung (20) umfasst, um von der Transfervorrichtung (15) jede Form (5) und die zugehörige Kassette (2), die mit Einbettmaterial (P) gefüllt sind, aufzunehmen und sie in besagtem Kühlbereich (B) abzulegen.

3. Arbeitsstation nach Anspruch 2, **dadurch gekennzeichnet, dass** sie eine dritte Handhabungsvorrichtung umfasst, die durch besagte zweite Handhabungsvorrichtung (20) oder durch eine weitere Handhabungsvorrichtung gebildet ist, die konfiguriert und programmiert ist, um eine Kassette (2) und den daran haftenden erstarrten Körper (7) aus Einbettmaterial (P) zusammen mit der zugehörigen Form (5) aufzunehmen, nachdem sie in besagtem Kühlbereich (B) gekühlt wurden, und sie zunächst zu einer Station zum Ablösen jeder Form (5) vom erstarrten Körper (7), der an der Kassette (2) haftet, und danach zu einem Ausgabebereich (U) der Arbeitsstation zu führen, der konfiguriert ist, um die Kassetten (2) mit den zugehörigen erstarrten Körpern (7), in denen die histologischen Proben (S) eingebettet sind, an ein Transportsystem (11) auszuliefern.

4. Arbeitsstation nach Anspruch 1, **dadurch gekennzeichnet, dass** besagter Arbeitsbereich (W) mit einem Monitor (M) ausgestattet ist, um dem Bediener die Informationen anzuzeigen, die im Informationsträger (C) der Kassette (2) enthalten sind, die sich am Arbeitsbereich (W) befindet.

5. Arbeitsstation nach Anspruch 1, **dadurch gekennzeichnet, dass** der Arbeitsbereich (W) mit einem Formenzuführsystem zum Zuführen von Formen (5) zum Arbeitsbereich (W) ausgestattet ist.

6. Arbeitsstation nach Anspruch 4, **dadurch gekennzeichnet, dass** besagtes Formenzuführsystem zum Zuführen der Formen (5) durch besagte elektronische Steuerung (E) so gesteuert wird, dass auf der Grundlage der Informationen, die im Informationsträger (C) der Kassette (2) enthalten sind, die sich am Arbeitsbereich (W) befindet, und nach Erfassung der Größe der histologischen Probe (S), die sich in der Kassette (2) befindet, eine Form (5) eines für die zu verarbeitende histologische Probe (S) geeigneten Typs ausgewählt und diese Form zum Arbeitsbereich (W) zugeführt wird.

7. Arbeitsstation nach Anspruch 1, **dadurch gekennzeichnet, dass** die erste Einbettmaterial-Abgabestation (14) zum Abgeben einer ersten Schicht Einbettmaterial innerhalb der Form (5) durch besagte elektronische Steuerung (E) auf der Grundlage des Signals eines Sensors nachgeführt wird, der den Füllstand des Einbettmaterials (P) innerhalb der Form (5) erfassen kann, so dass die Abgabe besagten Einbettmaterials (P) unterbrochen wird, wenn ein vorbestimmter Füllstand besagter erster Schicht Einbettmaterial (P) innerhalb der Form (5) erreicht wurde.

8. Arbeitsstation nach Anspruch 2, **dadurch gekennzeichnet, dass** sie ein automatisches Transportsystem zum Rückführen der Formen (5) nach deren Ablösung vom jeweiligen erstarrten Körper (7) aus Einbettmaterial (P) und von der zugehörigen Kassette (2) und zum Zuführen der rückgeführten Formen (5) über eine Reinigungsstation zurück zum Arbeitsbereich (W) umfasst.

9. Verfahren zum Einbetten histologischer Proben (S) in ein Einbettmaterial (P), umfassend die Schritte:
- Aufnehmen und Ansammeln von Kassetten (2), die histologische Proben (S) enthalten, die einer Einbettoperation unterzogen werden sollen, auf automatisierte Weise von einem Transportsystem (10) in einem Eingabebereich (A),
wobei jede Kassette (2) einen Körper umfasst, der einen Informationsträger (C) mit Informationen trägt, die der histologischen Probe (S) zugeordnet sind, die in der Kassette (2) enthalten ist,
- Erfassen der Informationen des Informationsträgers (C) jeder der Kassetten (2), die sich innerhalb des Eingabebereichs (A) befinden, mittels einer ersten Erfassungsvorrichtung (18'), die innerhalb besagten Eingabebereichs (A) angeordnet ist,
- Empfangen und Speichern der Informationen, die der histologischen Probe jeder der Kassetten (2), die sich innerhalb des Eingabebereichs (A) befinden, zugeordnet sind, von besagter Erfassungsvorrichtung (18') mittels einer elektronischen Steuerung (E) besagter Arbeitsstation,
- Steuern einer ersten Handhabungsvorrichtung (12) mittels besagter elektronischer Steuerung (E), um die Kassetten (2), die die histologischen Proben (S) enthalten, einzeln von besagtem Eingabebereich (A) zu besagtem Arbeitsbereich (W) gemäß einer in Echtzeit bestimmten Prioritätssequenz zuzuführen, die als Funktion der vorgenannten, den histologischen Proben (S) der Kassetten (2) zugeordneten Informationen bestimmt wird,
wobei mit besagtem Arbeitsbereich (W) eine erste Einbettmaterial-Abgabevorrichtung (14) verbunden ist, die verwendet werden kann, um eine erste Schicht Einbettmaterial innerhalb der ausgewählten Form (5) abzugeben,
- Bereitstellen eines Kühlbereichs (B) stromabwärts von besagter Transfervorrichtung (15),
wobei besagtes Verfahren **dadurch gekennzeichnet ist, dass**:
- ein Arbeitstisch für einen Bediener bereitgestellt wird, der einen Arbeitsbereich (W) für einen Bediener definiert,
- besagter Eingabebereich (A) auf einer Seite des Arbeitsbereichs (W) des Bedieners angeordnet ist, der durch besagten Arbeitstisch definiert ist,
- besagte erste Handhabungsvorrichtung (12) konfiguriert ist, um die Kassetten (2), die die histologischen Proben (S) enthalten, zu besagtem Arbeitsbereich (W) des Bedieners zuzuführen, der durch besagten Arbeitstisch definiert ist, wobei jede Kassette (2) mit einem abnehmbaren Deckel (3) verschlossen ist,
- die Zuführung jeder neuen Kassette (2) von besagtem Eingabebereich (A) zu besagtem Arbeitsbereich (W) des Bedieners, der durch den Arbeitstisch definiert ist, durch die elektronische Steuerung (E) erst nach Empfang eines Signals ermöglicht wird, das anzeigt, dass der Arbeitsbereich (W) des Bedieners frei ist, um eine neue Kassette (2) zu empfangen,
- wobei besagter Arbeitsbereich (W) des Bedieners mit einer Vielzahl von Einbettformen (5) ausgestattet ist, so dass der Bediener jedes Mal eine geeignete Form (5) entsprechend der Größe der histologischen Probe auswählen kann, die in jeder neuen Kassette (2) enthalten ist, die den Arbeitsbereich (W) des Bedieners, der durch den Arbeitstisch definiert ist, erreicht,
wobei für jede neue Kassette (2), die den Arbeitsbereich (W) erreicht, der Bediener den Deckel (3) entfernt und die histologische Probe (S) aus der Kassette (2) entnimmt, die Größe der histologischen Probe erfasst, folglich eine Form (5) auswählt, die Abgabe einer ersten Schicht Einbettmaterial innerhalb der ausgewählten Form (5) mittels besagter ersten Abgabevorrichtung (14) veranlasst, die histologische Probe (S) mit einer ausgewählten Orientierung innerhalb der Form (5) und über der ersten Schicht Einbettmaterial (P) platziert und dann die Kassette (2) über die Form (5) anbringt, die die so orientierte histologische Probe (S) enthält,
- wobei der Bediener ferner einzeln die Formen (5), die die orientierten histologischen Proben (S) enthalten, jede Form mit der jeweiligen darauf angebrachten Kassette (2), auf einer Transfervorrichtung (15) ablegt, die sich auf einer Seite des Arbeitsbereichs (W) befindet, auf der gegenüberliegenden Seite in Bezug auf besagten Eingabebereich (A), welche die Kassetten (2) aus dem Arbeitsbereich transferiert,
wobei das Verfahren ferner die Schritte umfasst:
- Erfassen der Informationen, die vom Informationsträger (C) jeder Kassette (2) getragen werden, die von besagter Transfervorrichtung (15) transportiert wird, mittels einer zweiten Erfassungsvorrichtung (18), die mit besagter Transfervorrichtung (15) verbunden ist, und
- Senden eines Signals an besagte elektronische Steuerung (E), das den Durchgang jeder neuen Kassette (2) auf der Transfervorrichtung (15) anzeigt, wobei ein solches Signal als Signal verwendet wird, das anzeigt, dass der Arbeitsbereich (W) des Bedieners frei ist, um eine neue Kassette vom Eingabebereich (A) zu empfangen, und
- Transportieren jeder Form (5) und der darauf platzierten zugehörigen Kassette (2) mittels besagter Transfervorrichtung (15) zu einer zweiten Einbettmaterial-Abgabevorrichtung (16), wo die Form (5) und die zugehörige Kassette (2) auf kontrollierte Weise mit einem Volumen Einbettmaterial (P) gefüllt werden, wobei besagte zweite Abgabevorrichtung (16) durch besagte elektronische Steuerung (E) auf der Grundlage des Signals eines Sensors (28) nachgeführt wird, der den Füllstand des Einbettmaterials (P) innerhalb der Form (5) und der zugehörigen Kassette (2) erfassen kann, so dass die Abgabe besagten Einbettmaterials (P) unterbrochen wird, wenn ein vorbestimmter Füllstand des Einbettmaterials (P) innerhalb der Form (5) und der zugehörigen Kassette (2) erreicht wurde, und
Aufnehmen und Ansammeln auf automatisierte Weise in besagtem Kühlbereich (B) der von besagter Transfervorrichtung (15) kommenden Formen (5), jede mit der jeweiligen, vom Einbettmaterial bedeckten histologischen Probe und der jeweiligen, auf der Form (5) angebrachten Kassette (2), so dass das Einbettmaterial (P), das jede histologische Probe (S) enthält, einen erstarrten Körper (7) bildet, in dem die histologische Probe eingebettet ist.

10. Verfahren nach Anspruch 9, **dadurch gekennzeichnet, dass** es ferner den Schritt umfasst, mittels einer zweiten Handhabungsvorrichtung (20) jede Form (5) und die zugehörige Kassette (2) von der Transfervorrichtung (15) stromabwärts der zweiten Einbettmaterial-Abgabevorrichtung (16) aufzunehmen und die Form (5) mit der zugehörigen Kassette (2) in besagtem Kühlbereich (B) abzulegen.

11. Verfahren nach Anspruch 10, **dadurch gekennzeichnet, dass** es ferner die Schritte umfasst:
- Aufnehmen einer Kassette (2) und des daran haftenden erstarrten Körpers (7) aus Einbettmaterial (P) zusammen mit der zugehörigen Form (5) nach deren Kühlung in besagtem Kühlbereich (B) mittels einer dritten Handhabungsvorrichtung, die durch die zweite Handhabungsvorrichtung (20) oder durch eine weitere Handhabungsvorrichtung gebildet ist, und Zuführen derselben zunächst zu einer Station zum Ablösen jeder Form (5) vom erstarrten Körper (7), der an der Kassette (2) haftet, und danach zu einem Ausgabebereich (U),
- Ausliefern der Kassetten (2) mit den zugehörigen erstarrten Körpern (7), in denen die histologischen Proben (S) eingebettet sind, von besagtem Ausgabebereich (U) an ein Transportsystem (11).

12. Verfahren nach Anspruch 9, **dadurch gekennzeichnet, dass** an besagtem Arbeitsbereich (W) ein Bediener die zu gebende Orientierung der in der Form (5) platzierten histologischen Probe (S) auf der Grundlage der Informationen auswählt, die im Informationsträger (C) der Kassette (2) enthalten sind, die sich am Arbeitsbereich (W) befindet, wobei diese Informationen auf einem Monitor (M) verfügbar gemacht werden, mit dem der Arbeitsbereich (W) ausgestattet ist.

13. Verfahren nach Anspruch 9, **dadurch gekennzeichnet, dass** es die Bereitstellung eines Formenzuführsystems zum Zuführen von Formen (5) zum Arbeitsbereich (W) umfasst, wobei das System in der Lage ist, auf der Grundlage der Informationen, die im Informationsträger (C) der Kassette (2) enthalten sind, die sich am Arbeitsbereich (W) befindet, und nach Erfassung des Volumens der histologischen Probe (S), die sich in der Kassette (2) befindet, eine Form (5) eines für die zu verarbeitende histologische Probe (S) geeigneten Typs auszuwählen und diese Form zum Arbeitsbereich (W) zuzuführen.

14. Verfahren nach Anspruch 9, **dadurch gekennzeichnet, dass** es das Kalibrieren des Abgabevorgangs einer ersten Schicht Einbettmaterial innerhalb der Form (5), die im Arbeitsbereich (W) verarbeitet wird, auf der Grundlage der Größe der Form (5) umfasst und die Abgabe unterbricht, wenn ein vorbestimmter Füllstand besagter erster Schicht Einbettmaterial innerhalb der Form (5) erreicht wird.

15. Verfahren nach Anspruch 10, **dadurch gekennzeichnet, dass** die Formen (5) nach deren Ablösung vom jeweiligen erstarrten Körper (7) aus Einbettmaterial (P) und von der zugehörigen Kassette (2) mittels eines automatischen Transportsystems rückgeführt werden, welches die rückgeführten Formen über eine Reinigungsstation zurück zum Arbeitsbereich (W) führt.

## Revendications

1. Poste de travail automatisé, pour l'inclusion d'échantillons histologiques (S) avec un matériau d'inclusion (P), le poste de travail comprenant :
- une zone d'entrée (A) pour les échantillons histologiques destinés à subir une opération d'inclusion, configurée pour recevoir et accumuler de manière automatisée, à partir d'un système de transport (10), des cassettes (2) contenant des échantillons histologiques (S),
dans lequel chaque cassette (2) comprend un corps portant un support d'information (C) avec des informations associées à l'échantillon histologique (S) qui est contenu dans la cassette (2),
- un premier dispositif de détection (18') disposé dans ladite zone d'entrée (A) et configuré pour détecter les informations du support d'information (C) de chacune des cassettes (2) situées dans la zone d'entrée (A),
- un premier dispositif de manutention (12) adjacent à ladite zone d'entrée (A) et à une zone de travail (W), et configuré et programmé pour saisir les cassettes (2) contenant les échantillons histologiques (S) de ladite zone d'entrée (A) et pour les alimenter, une à une, vers ladite zone de travail (W),
- un contrôleur électronique (E) dudit poste de travail, configuré et programmé pour :
- recevoir dudit dispositif de détection (18'), et stocker, les informations associées à l'échantillon histologique de chacune des cassettes (2) situées dans la zone d'entrée (A),
- commander ledit premier dispositif de manutention (12), de manière à alimenter, une à une, les cassettes (2) contenant les échantillons histologiques (S) de ladite zone d'entrée (A) vers ladite zone de travail (W), selon une séquence de priorité déterminée en temps réel en fonction desdites informations associées aux échantillons histologiques (S) des cassettes (2),
dans lequel un premier dispositif de distribution de matériau d'inclusion (14), qui peut être utilisé pour distribuer une première couche de matériau d'inclusion à l'intérieur du moule sélectionné (5), est associé à ladite zone de travail,
ledit poste de travail comprenant en outre :
- un dispositif de transfert (15) pour transférer les cassettes (2) hors de la zone de travail, et
- une zone de refroidissement (B) disposée en aval dudit dispositif de transfert (15),
ledit poste de travail étant **caractérisé en ce que** :
- le poste de travail est un poste de travail pour un opérateur, comprenant un plan de travail pour un opérateur, définissant ladite zone de travail (W) pour ledit opérateur,
- ladite zone d'entrée (A) est placée sur un côté de la zone de travail (W) de l'opérateur définie par ledit plan de travail,
- ledit premier dispositif de manutention (12) est configuré pour alimenter les cassettes (2) contenant les échantillons histologiques (S) vers ladite zone de travail (W) de l'opérateur définie par ledit plan de travail, chaque cassette (2) étant fermée avec un couvercle amovible (3),
- ledit contrôleur électronique (E) est configuré pour permettre l'alimentation de chaque nouvelle cassette (2) de ladite zone d'entrée (A) vers ladite zone de travail (W) de l'opérateur définie par le plan de travail uniquement après réception d'un signal qui indique que la zone de travail (W) de l'opérateur est libre pour recevoir une nouvelle cassette (2),
- ladite zone de travail (W) de l'opérateur définie par ledit plan de travail est pourvue d'une pluralité de moules d'inclusion (5), de sorte que l'opérateur peut sélectionner à chaque fois un moule approprié (5), selon la taille de l'échantillon histologique contenu dans chaque nouvelle cassette (2) qui atteint la zone de travail (W) de l'opérateur,
et de sorte que, pour chaque nouvelle cassette (2) atteignant la zone de travail (W), l'opérateur retire le couvercle (3) de la cassette, retire l'échantillon histologique (S) de la cassette (2), détecte le volume de l'échantillon histologique, sélectionne en conséquence un moule (5), obtient la distribution d'une première couche de matériau d'inclusion à l'intérieur du moule sélectionné (5) au moyen dudit premier dispositif de distribution (14), place l'échantillon histologique (S), avec une orientation sélectionnée, à l'intérieur du moule (5) et sur la première couche de matériau d'inclusion (P), puis applique la cassette (2) sur le moule (5) contenant l'échantillon histologique (S) ainsi orienté,
- le dispositif de transfert pour transférer les cassettes hors de la zone de travail est disposé sur un côté de la zone de travail (W) définie par ledit plan de travail, sur le côté opposé par rapport à ladite zone d'entrée (A), ledit dispositif de transfert (15) étant configuré pour recevoir, une à une, de l'opérateur, les moules (5) contenant les échantillons histologiques orientés (S), chaque moule avec la cassette respective (2) appliquée dessus,
- ledit poste de travail comprenant en outre :
- un deuxième dispositif de détection (18) associé audit dispositif de transfert (15) et disposé et configuré pour détecter les informations portées par le support d'information (C) de chaque cassette (2) transportée par ledit dispositif de transfert (15), et pour envoyer audit contrôleur électronique (E) un signal qui indique le passage de chaque nouvelle cassette (2) sur le dispositif de transfert (15), ce signal étant utilisé comme un signal qui indique que la zone de travail (W) de l'opérateur est libre pour recevoir une nouvelle cassette de la zone d'entrée (A), et
- un deuxième dispositif de distribution de matériau d'inclusion (16) associé audit dispositif de transfert (15), et configuré pour remplir, de manière contrôlée, chaque moule (5) transporté par ledit dispositif de transfert (15), et la cassette associée (2) placée dessus, avec un volume de matériau d'inclusion (P), ledit deuxième dispositif de distribution (16) étant asservi par ledit contrôleur électronique (E) sur la base du signal d'un capteur (28) capable de détecter le niveau du matériau d'inclusion (P) à l'intérieur du moule (5) et de la cassette associée (2), de telle sorte que la distribution dudit matériau d'inclusion (P) est interrompue lorsqu'un niveau prédéterminé de matériau d'inclusion (P) à l'intérieur du moule (5) et de la cassette associée (2) a été atteint,
et dans lequel ladite zone de refroidissement (B) est configurée pour recevoir et accumuler de manière automatisée les moules (5) provenant dudit dispositif de transfert (15), chacun avec l'échantillon histologique respectif recouvert par le matériau d'inclusion et la cassette respective (2) appliquée sur le moule (5), de telle sorte que dans ladite zone de refroidissement le matériau d'inclusion (P) contenant chaque échantillon histologique (S) forme un corps solidifié (7), dans lequel l'échantillon histologique est inclus.

2. Poste de travail selon la revendication 1, **caractérisé en ce qu'**il comprend en outre un deuxième dispositif de manutention (20), pour saisir du dispositif de transfert (15) chaque moule (5) et la cassette associée (2), qui sont remplis de matériau d'inclusion (P), et pour les déposer à ladite zone de refroidissement (B).

3. Poste de travail selon la revendication 2, **caractérisé en ce qu'**il comprend un troisième dispositif de manutention, constitué par ledit deuxième dispositif de manutention (20) ou par un dispositif de manutention supplémentaire, configuré et programmé pour saisir une cassette (2) et le corps solidifié (7) de matériau d'inclusion (P) y adhérant, ainsi que le moule associé (5), après qu'ils ont été refroidis à ladite zone de refroidissement (B), et pour les alimenter d'abord vers une station pour le détachement de chaque moule (5) du corps solidifié (7) adhérant à la cassette (2) et ensuite vers une zone de sortie (U) du poste de travail qui est configurée pour délivrer les cassettes (2), avec les corps solidifiés associés (7) dans lesquels les échantillons histologiques (S) sont inclus, à un système de transport (11).

4. Poste de travail selon la revendication 1, **caractérisé en ce que** ladite zone de travail (W) est équipée d'un moniteur (M) pour afficher à l'opérateur les informations contenues dans le support d'information (C) de la cassette (2) située à la zone de travail (W).

5. Poste de travail selon la revendication 1, **caractérisé en ce que** la zone de travail (W) est pourvue d'un système d'alimentation en moules, pour alimenter des moules (5) vers la zone de travail (W).

6. Poste de travail selon la revendication 4, **caractérisé en ce que** ledit système d'alimentation en moules pour alimenter les moules (5) est commandé par ledit contrôleur électronique (E) de manière à sélectionner, sur la base des informations contenues dans le support d'information (C) de la cassette (2) située à la zone de travail (W) et après détection de la taille de l'échantillon histologique (S) qui se trouve dans la cassette (2), un moule (5) d'un type adapté à l'échantillon histologique (S) à traiter et pour alimenter ce moule vers la zone de travail (W).

7. Poste de travail selon la revendication 1, **caractérisé en ce que** la première station de distribution de matériau d'inclusion (14) pour distribuer une première couche de matériau d'inclusion à l'intérieur du moule (5) est asservie par ledit contrôleur électronique (E) sur la base du signal d'un capteur capable de détecter le niveau du matériau d'inclusion (P) à l'intérieur du moule (5), de telle sorte que la distribution dudit matériau d'inclusion (P) est interrompue lorsqu'un niveau prédéterminé de ladite première couche de matériau d'inclusion (P) à l'intérieur du moule (5) a été atteint.

8. Poste de travail selon la revendication 2, **caractérisé en ce qu'**il comprend un système de transport automatique pour la récupération des moules (5) après leur détachement du corps solidifié respectif (7) de matériau d'inclusion (P) et de la cassette associée (2), et pour alimenter les moules récupérés (5), à travers une station de nettoyage, de retour vers la zone de travail (W).

9. Procédé pour l'inclusion d'échantillons histologiques (S) dans un matériau d'inclusion (P), comprenant les étapes de :
- recevoir, et accumuler, de manière automatisée à partir d'un système de transport (10), dans une zone d'entrée (A), des cassettes (2) contenant des échantillons histologiques (S) destinés à subir une opération d'inclusion,
dans lequel chaque cassette (2) comprend un corps portant un support d'information (C) avec des informations associées à l'échantillon histologique (S) qui est contenu dans la cassette (2),
- détecter, au moyen d'un premier dispositif de détection (18') disposé dans ladite zone d'entrée (A), les informations du support d'information (C) de chacune des cassettes (2) situées dans la zone d'entrée (A),
- au moyen d'un contrôleur électronique (E) dudit poste de travail, recevoir dudit dispositif de détection (18'), et stocker, les informations associées à l'échantillon histologique de chacune des cassettes (2) situées dans la zone d'entrée (A),
- commander, au moyen dudit contrôleur électronique (E), un premier dispositif de manutention (12) de manière à alimenter, une à une, les cassettes (2) contenant les échantillons histologiques (S) de ladite zone d'entrée (A) vers ladite zone de travail (W), selon une séquence de priorité déterminée en temps réel en fonction desdites informations associées aux échantillons histologiques (S) des cassettes (2),
dans lequel un premier dispositif de distribution de matériau d'inclusion (14), qui peut être utilisé pour distribuer une première couche de matériau d'inclusion à l'intérieur du moule sélectionné (5), est associé à ladite zone de travail (W),
- prévoir une zone de refroidissement (B) en aval dudit dispositif de transfert (15),
ledit procédé étant **caractérisé en ce que** :
- un plan de travail pour un opérateur est prévu, qui définit une zone de travail (W) pour un opérateur,
- ladite zone d'entrée (A) est placée sur un côté de la zone de travail (W) de l'opérateur définie par ledit plan de travail,
- ledit premier dispositif de manutention (12) est configuré pour alimenter les cassettes (2) contenant les échantillons histologiques (S) vers ladite zone de travail (W) de l'opérateur définie par ledit plan de travail, chaque cassette (2) étant fermée avec un couvercle amovible (3),
- l'alimentation de chaque nouvelle cassette (2) de ladite zone d'entrée (A) vers ladite zone de travail (W) de l'opérateur définie par le plan de travail est activée par le contrôleur électronique (E) uniquement après réception d'un signal qui indique que la zone de travail (W) de l'opérateur est libre pour recevoir une nouvelle cassette (2),
- dans lequel ladite zone de travail (W) de l'opérateur est pourvue d'une pluralité de moules d'inclusion (5), de sorte que l'opérateur peut sélectionner à chaque fois un moule approprié (5), selon la taille de l'échantillon histologique contenu dans chaque nouvelle cassette (2) qui atteint la zone de travail (W) de l'opérateur définie par le plan de travail,
dans lequel, pour chaque nouvelle cassette (2) atteignant la zone de travail (W), l'opérateur retire le couvercle (3) et retire l'échantillon histologique (S) de la cassette (2), détecte la taille de l'échantillon histologique, sélectionne en conséquence un moule (5), obtient la distribution d'une première couche de matériau d'inclusion à l'intérieur du moule sélectionné (5) au moyen dudit premier dispositif de distribution (14), place l'échantillon histologique (S), avec une orientation sélectionnée, à l'intérieur du moule (5) et sur la première couche de matériau d'inclusion (P), puis applique la cassette (2) sur le moule (5) contenant l'échantillon histologique (S) ainsi orienté,
- dans lequel l'opérateur dépose en outre, une à une, les moules (5) contenant les échantillons histologiques orientés (S), chaque moule avec la cassette respective (2) appliquée dessus, sur un dispositif de transfert (15) situé sur un côté de la zone de travail (W), sur le côté opposé par rapport à ladite zone d'entrée (A), qui transfère les cassettes (2) hors de la zone de travail,
le procédé comprenant en outre les étapes de :
- détecter, au moyen d'un deuxième dispositif de détection (18) associé audit dispositif de transfert (15), les informations portées par le support d'information (C) de chaque cassette (2) transportée par ledit dispositif de transfert (15), et
- envoyer audit contrôleur électronique (E) un signal qui indique le passage de chaque nouvelle cassette (2) sur le dispositif de transfert (15), ce signal étant utilisé comme un signal qui indique que la zone de travail (W) de l'opérateur est libre pour recevoir une nouvelle cassette de la zone d'entrée (A), et
- transporter chaque moule (5) et la cassette associée (2) placée dessus, au moyen dudit dispositif de transfert (15), vers un deuxième dispositif de distribution de matériau d'inclusion (16), où le moule (5) et la cassette associée (2) sont remplis, de manière contrôlée, avec un volume de matériau d'inclusion (P), ledit deuxième dispositif de distribution (16) étant asservi par ledit contrôleur électronique (E) sur la base du signal d'un capteur (28) capable de détecter le niveau du matériau d'inclusion (P) à l'intérieur du moule (5) et de la cassette associée (2), de telle sorte que la distribution dudit matériau d'inclusion (P) est interrompue lorsqu'un niveau prédéterminé de matériau d'inclusion (P) à l'intérieur du moule (5) et de la cassette associée (2) a été atteint, et
recevoir et accumuler de manière automatisée, dans ladite zone de refroidissement (B), les moules (5) provenant dudit dispositif de transfert (15), chacun avec l'échantillon histologique respectif recouvert par le matériau d'inclusion et la cassette respective (2) appliquée sur le moule (5), de telle sorte que le matériau d'inclusion (P) contenant chaque échantillon histologique (S) forme un corps solidifié (7) dans lequel l'échantillon histologique est inclus.

10. Procédé selon la revendication 9, **caractérisé en ce qu'**il comprend en outre l'étape de saisir, au moyen d'un deuxième dispositif de manutention (20), chaque moule (5) et la cassette associée (2) du dispositif de transfert (15), en aval du deuxième dispositif de distribution de matériau d'inclusion (16), et de déposer le moule (5) avec la cassette associée (2) à ladite zone de refroidissement (B).

11. Procédé selon la revendication 10, **caractérisé en ce qu'**il comprend en outre les étapes de :
- saisir, après qu'ils ont été refroidis à ladite zone de refroidissement (B), et au moyen d'un troisième dispositif de manutention, constitué par le deuxième dispositif de manutention (20) ou par un dispositif de manutention supplémentaire, une cassette (2) et le corps solidifié (7) de matériau d'inclusion (P) y adhérant, ainsi que le moule associé (5), et pour les alimenter d'abord vers une station pour le détachement de chaque moule (5) du corps solidifié (7) adhérant à la cassette (2), et ensuite vers une zone de sortie (U),
- délivrer, de ladite zone de sortie (U) à un système de transport (11), les cassettes (2) avec les corps solidifiés associés (7) dans lesquels les échantillons histologiques (S) sont inclus.

12. Procédé selon la revendication 9, **caractérisé en ce qu'**à ladite zone de travail (W) un opérateur sélectionne l'orientation à donner à l'échantillon histologique (S) placé à l'intérieur du moule (5) sur la base des informations contenues dans le support d'information (C) de la cassette (2) située à la zone de travail (W), lesquelles informations sont mises à disposition sur un moniteur (M) dont la zone de travail (W) est équipée.

13. Procédé selon la revendication 9, **caractérisé en ce qu'**il comprend la fourniture d'un système d'alimentation en moules pour alimenter des moules (5) vers la zone de travail (W), lequel système est capable de sélectionner, sur la base des informations contenues dans le support d'information (C) de la cassette (2) située à la zone de travail (W), et après détection du volume de l'échantillon histologique (S) qui se trouve dans la cassette (2), un moule (5) d'un type adapté à l'échantillon histologique (S) à traiter et pour alimenter ce moule vers la zone de travail (W).

14. Procédé selon la revendication 9, **caractérisé en ce qu'**il comprend l'étalonnage de l'opération de distribution d'une première couche de matériau d'inclusion à l'intérieur du moule (5) qui est en cours de traitement à la zone de travail (W), sur la base de la taille du moule (5), et l'interruption de la distribution lors de l'atteinte d'un niveau prédéterminé de ladite première couche de matériau d'inclusion à l'intérieur du moule (5).

15. Procédé selon la revendication 10, **caractérisé en ce que** les moules (5) sont récupérés, après leur détachement du corps solidifié respectif (7) de matériau d'inclusion (P) et de la cassette associée (2), au moyen d'un système de transport automatique qui alimente les moules récupérés, à travers une station de nettoyage, de retour vers la zone de travail (W).
